# EUROPEAN PATENT APPLICATION

(11) **EP 1 646 135 A1**
(43) Date of publication of application: **12.04.2006**
(21) Application number: 04747394.7
(22) Date of filing: 12.07.2004
(51) Int. Cl.: H02M 7/12

(54) **THREE-PHASE POWER CONVERTER AND POWER CONVERTER**

(30) Priority: 15.07.2003 JP 2003197085
(71) Applicant: MITSUBISHI DENKI KABUSHIKI KAISHA, Tokyo 100-8310 (JP)
(72) Inventor: Nishida, N.,c/o Mitsubishi Denki Kabushiki Kaisha, Tokyo 100-8310 (JP); Shinomoto, Y.,c/o Mitsubishi Denki K.K., Tokyo 100-8310 (JP); Kawakubo, M.,c/o Mitsubishi Denki K.K., Tokyo 100-8310 (JP); Yamada, M.,c/o Mitsubishi Denki K.K., Tokyo 100-8310 (JP); Arisawa, K.,c/o Mitsubishi Denki Kabushiki Kaisha, Tokyo 100-8310 (JP); Yabe, M.,c/o Mitsubishi Denki Kabushiki Kaisha, Tokyo 100-8310 (JP)
(74) Representative: Pfenning, Meinig & Partner GbR
(86) International application number: PCT/JP2004/009928
(87) International publication number: WO 2005/006531

(57) **Abstract**

To obtain a power converter that can suppress the harmonics in the input current to a system to a predetermined value in a power utilization system connected a three-phase four-wire AC power supply.

A power converter 5 arranged in a power utilization system 2 includes a three-phase power converter 6 that supplies power to a three-phase load 3, upon application of respective line voltages of a three-phase four-wire AC power supply 1, and a single-phase power converter 7 that supplies power to a single-phase load 4, upon application of phase voltage between a neutral line and one phase of the three-phase four-wire AC power supply 1. The three-phase power converter 6 and the single-phase power converter 7 have either one of AC-DC conversion function and AC-AC conversion function, and a predetermined harmonic suppression function, when having the AC-DC conversion function, and are respectively arranged in a number equal to or less than the number of corresponding loads. As a whole, the power converters are selected so as to suppress the harmonics in the input current to the power utilization system 2 to a predetermined value.

## Description

### TECHNICAL FIELD

The present invention relates to a three-phase power converter, and a power converter used in a power utilization system connected to a three-phase four-wire alternate-current (AC) power supply, in which one or more three-phase loads and one or more single-phase loads are present together.

### BACKGROUND ART

In the power converter used in the power utilization system connected to a multi-phase AC power supply, suppression of harmonic current and improvement in power factor of a power supply are important subjects, and various proposals have been heretofore made (For example, Patent Literatures 1 to 4).

That is, in the Patent Literature 1, a rectifier circuit is disclosed, which includes a reactor, a rectifier that rectifies AC voltage applied via the reactor, a pair of capacitors serially connected to each other between output terminals of the rectifier, a switching unit connected to an input terminal of the rectifier, a resonant capacitor connected to between the switching unit and a node of the capacitors, and a controller that allows the switching unit to switch once during the half cycle of the AC voltage.

In the Patent Literature 2, a converter is disclosed in which a three-phase full-wave rectifier circuit is connected to a three-phase AC power supply via a reactor, smoothing capacitors serially connected to each other are connected to between output terminals of the three-phase full-wave rectifier circuit, a switching unit is connected to between the input terminal of each phase of the three-phase full-wave rectifier circuit and a node of smoothing capacitors, and a controller is provided to control the switching unit so as to perform the switching operation corresponding to fluctuations in loads and the power supply voltage.

In short, the Patent Literature 1 and 2 disclose a technique in which the switching elements connected to each phase of the multi-phase AC power supply are allowed to switch once during the half cycle of the power supply, to expand a conduction angle of the input current in each phase, while reducing the switching noise as much as possible, thereby to suppress the harmonic current generated in the system, and improve the power factor of the power supply.

In the Patent Literature 3, a three-phase rectifier circuit having a capacitive load and an inductance on the input side of a power supply is disclosed, wherein capacitors star-connected or delta-connected to the input side of the power supply in parallel therewith are provided, and a capacitance value is set according to a power factor and/or a desired voltage of an intermediate circuit or both. The capacitors are permitted for individual connection switching and shut-off switching, and the switching connection of the capacitors is performed by a voltage adjusting device relying on the output voltage of the rectifier, to realize an improvement in the power factor of the power supply and suppression in the harmonics in the input current.

In the Patent Literature 4, a three-phase power factor improving capacitor having a circuit configuration in which three sets of single phase capacitors having a harmonic suppression function are connected between a neutral line and respective phases of a three-phase four-wire AC power supply is disclosed, wherein booster choppers and insulated DC-DC converters having the output of the booster chopper as an input are respectively connected to a single phase input power supply between the neutral line and the respective phases, the respective outputs of the insulated DC-DC converters are connected in parallel, and the main switches of the DC-DC converters are driven by the same control signal to improve the power factor of three-phase four-wire AC power supply including the neutral line, and suppress the harmonics in the input current.
Patent Literature 1: Japanese Patent Application Laid-open No. 2001-224178 Publication
Patent Literature 2: Japanese Patent Application Laid-open No. H10-1774442 Publication
Patent Literature 3: Japanese Patent Application Laid-open No. H9-121545 Publication
Patent Literature 4: Japanese Patent Application Laid-open No. H10-271823 Publication

However, in the power converters disclosed in the Patent Literature 1 to 4, the input current conduction section in each phase is enlarged, so as to suppress collectively the harmonics in the input current of the respective phases in the multi-phase AC power supply to be connected. Therefore, for example, in the power utilization system connected to the three-phase four-wire AC power supply such as European commercial power supply, the harmonics in the input current may not be suppressed sufficiently, according to the power supply method to which the system is connected. In this case, it is necessary to newly take measures, and as a result, the apparatus becomes unnecessarily large, causing a problem in that low cost is hardly achieved.

In other words, in the power utilization system connected to the three-phase four-wire AC power supply, such as European commercial power supply, the system is constructed such that loads are divided into three-phase loads connected to the respective phases other than the neutral line, and single-phase loads connected to between a neutral line and a specific phase, and power is supplied to the respective loads by a line voltage or a phase voltage of the three-phase four-wire AC power supply. By having such a configuration, the phase voltage having a lower level than the line voltage is only applied to the single-phase load, and hence elements having a low resisting pressure can be used, thereby realizing small size and low cost of the system.

Specifically, for example, in an air conditioner, being the power utilization system connected to the three-phase power supply, power is supplied to a compressor load having large power consumption from three lines of three phases in the AC power supply, and power is supplied to an indoor blower, an outdoor blower, and a control power supply for respective units from a single-phase voltage of the AC power supply, thereby enabling realization of small size and low cost of the blowers and control power supply.

In the power converter disclosed in the Patent Literature 1 to 3, however, the harmonic in the current flowing in the neutral line of the AC power supply cannot be suppressed. Therefore, when the harmonic generated in the system is to be reduced to a predetermined value, the low-cost method as described above cannot be employed.

On the other hand, in the converter disclosed in the Patent Literature 4, the harmonic in the current flowing in the neutral line of the AC power supply can be suppressed, but since three sets of single-phase converters are required with respect to the three-phase power supply, the number of parts constituting the power converter increases. In addition, the respective single-phase converters perform high-frequency switching control, to increase generated noise, and hence measures should be taken against the noise. That is, there is a problem in that a very expensive power converter is obtained.

On the other hand, here is an example in which the system is constituted so as to supply power to the single-phase load via the power converter disclosed in the Patent Literature 1 to 4, giving up to achieve the small-size and low-cost configuration. In this case, even when reduction in the harmonic by the single-phase load is not particularly required, the power converter must enhance the ranking in the element ratings by the portion of the current capacity of the single-phase load. Accordingly, the apparatus becomes large and expensive.

The present invention has been achieved in order to solve the above problems. It is an object of the present invention to obtain a three-phase power converter and a single-phase power converter that can have a harmonic suppression function, and a power converter in a power utilization system constructed by using these, with an inexpensive configuration, and connected to a three-phase four-wire AC power supply, which can suppress the harmonics in the input current to the system to a predetermined value.

### DISCLOSURE OF THE INVENTION

In order to achieve the object, in the three-phase power converter according to the present invention, in a configuration such that a full-wave rectifier circuit is obtained by serially connecting two smoothing capacitors between DC output terminals of a three-phase rectifier that rectifies alternating voltage input via a reactor connected to each phase line of a three-phase AC power supply, three short-circuiting units are provided, with one end connected to an end connection between the reactor and input terminals of the respective phases of the three-phase rectifier, and the other end commonly connected to a midpoint of the two smoothing capacitors, and in a configuration such that the full-wave rectifier circuit is obtained by connecting one smoothing capacitor between the DC output terminals of the three-phase rectifier that rectifies alternating voltage input via the reactor connected to each phase line of the three-phase AC power supply, three short-circuiting units are provided, with one end connected to an end connection between the reactor and input terminals of the respective phases of the three-phase rectifier, and the other end commonly connected to one output terminal of the three-phase rectifier. In both cases, a controller that controls the switching operation of three short-circuiting units corresponding to fluctuations in the loads and the power supply voltage is provided. Further, according to need, in the former case, a capacitor is provided between the commonly connected other ends of the three short-circuiting units and the midpoint of the two smoothing capacitors, and in the latter case, a capacitor is provided between the commonly connected other ends of the three short-circuiting units and one output terminal of the three-phase rectifier.

According to this invention, the harmonics in the input current can be suppressed and the power factor of the power supply can be improved, by a simple switching method for controlling the switching operation such that the short-circuiting unit performs short-circuiting operation only once or several times during the half cycle of the power supply, corresponding to fluctuations in the loads and the power supply voltage. Further, when the capacitor is provided, the controller controls the switching operation of the three short-circuiting units so that in a load condition higher than a certain load set condition, these do not perform an opening operation until charging to the capacitor is completed after having performed a closing operation once, and in a load condition lower than the certain set condition, these perform the opening operation before completion of charging to the capacitor after having performed the closing operation once. As a result, noises generated due to the switching operation of the short-circuiting units can be suppressed.

### BRIEF DESCRIPTION OF THE DRAWINGS

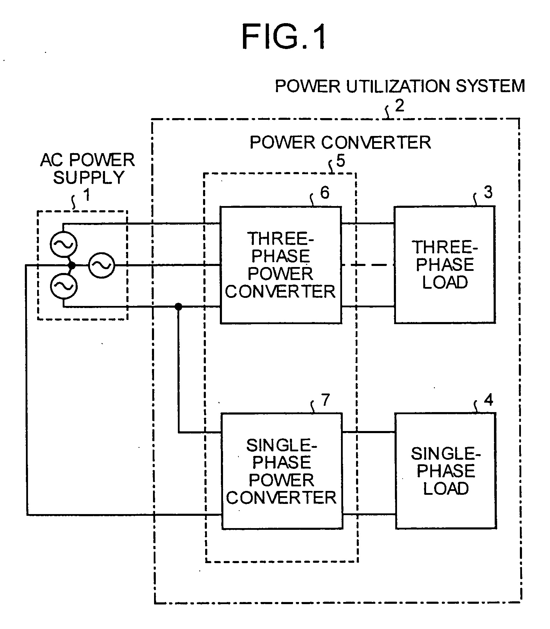

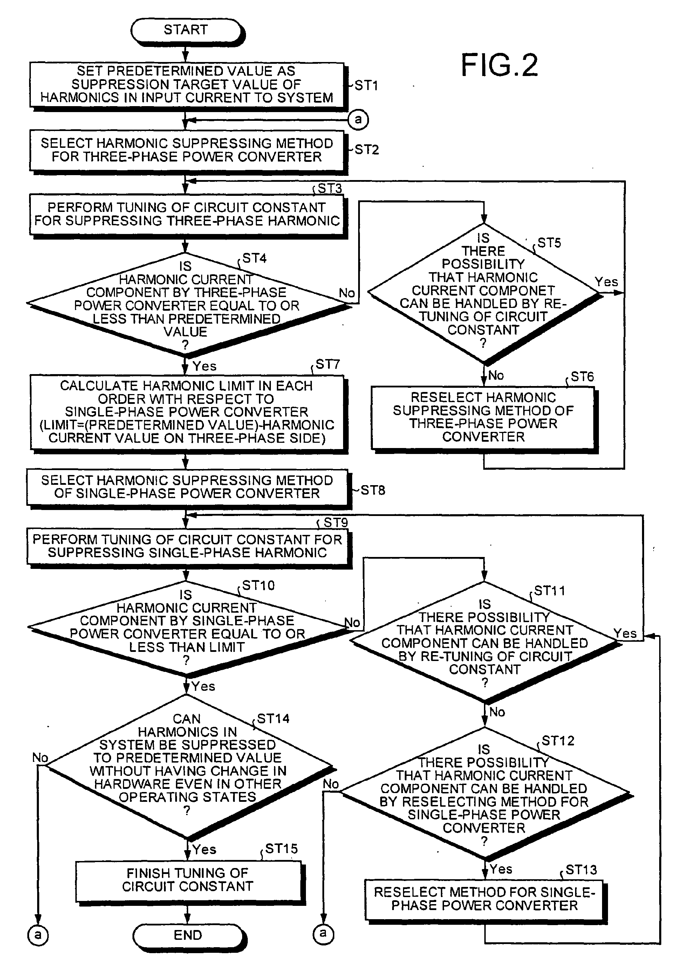

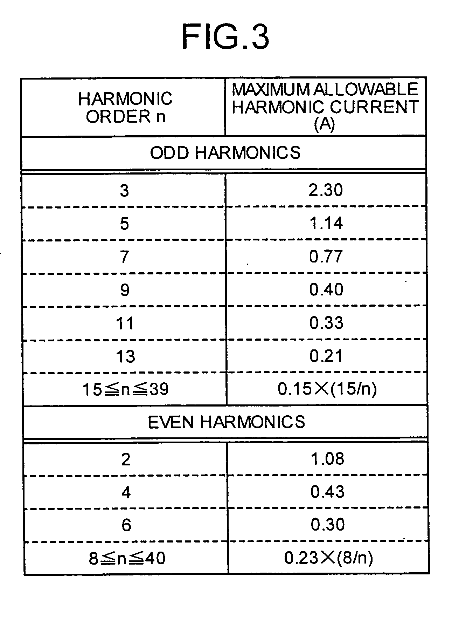

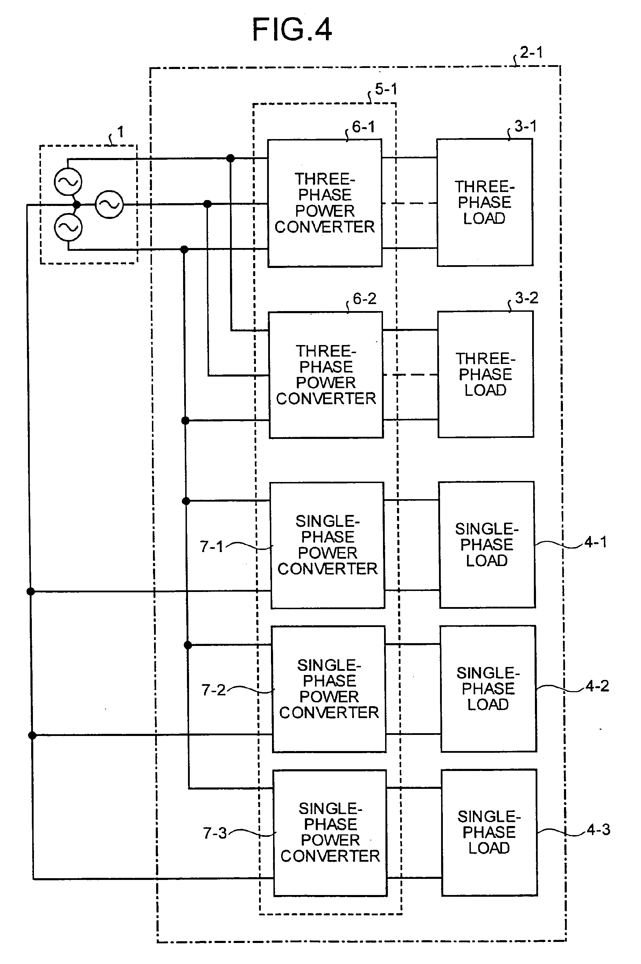

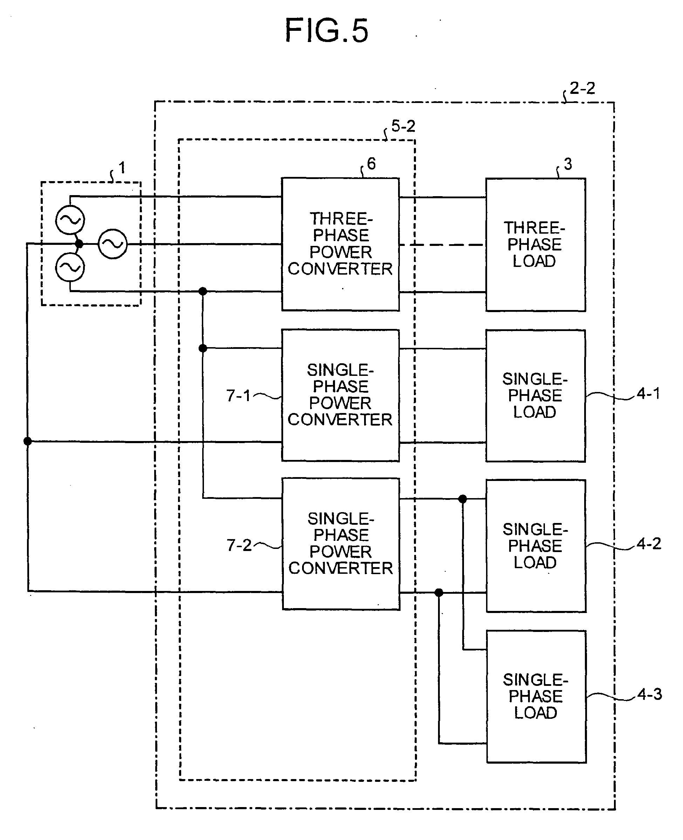

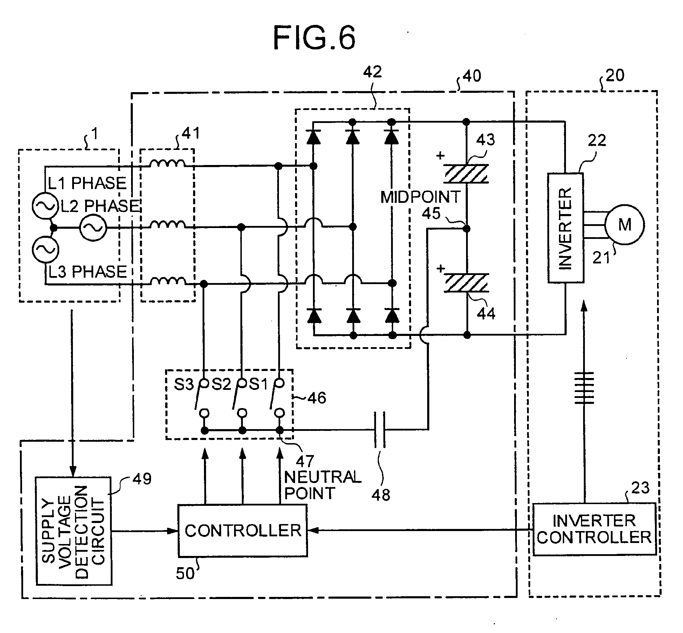

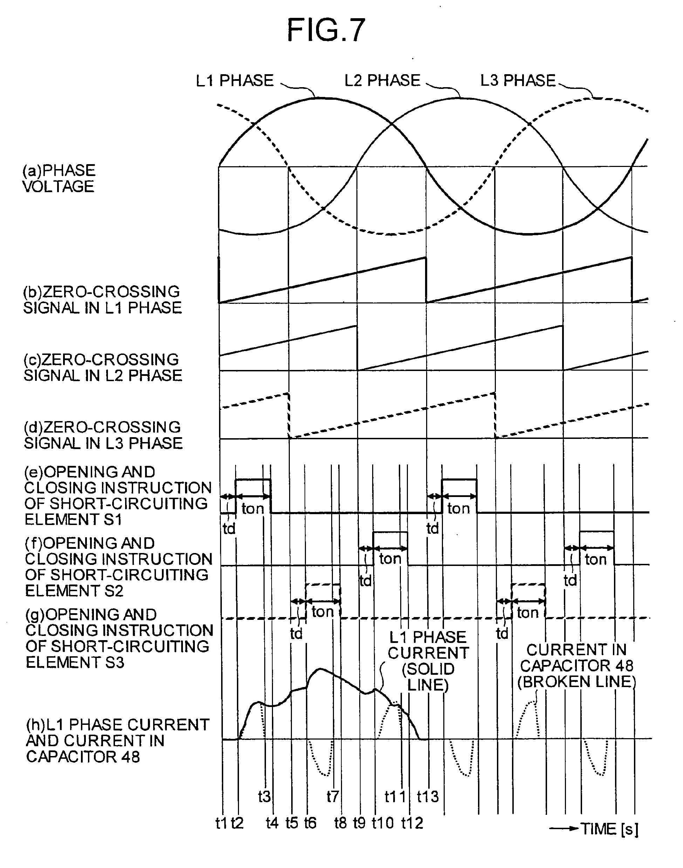

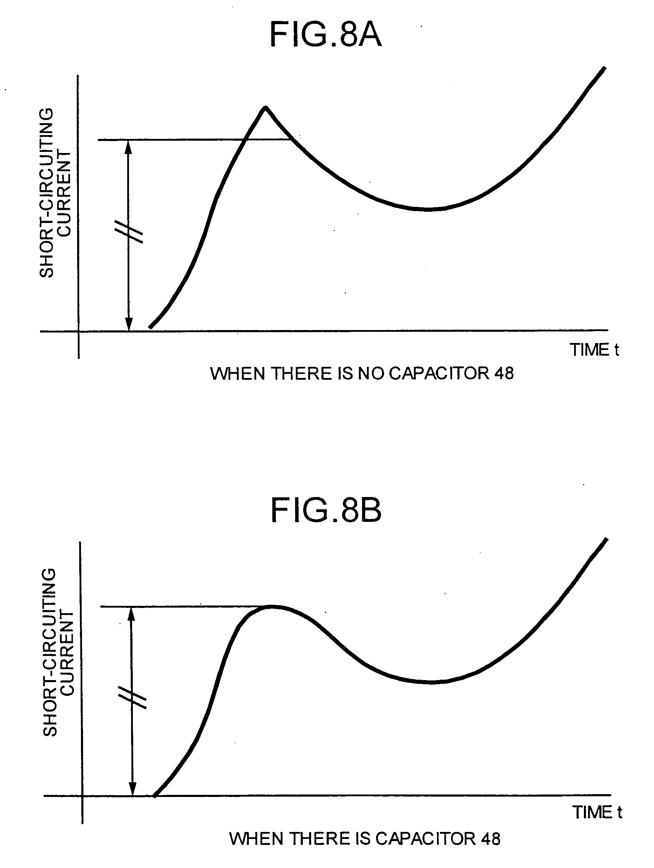

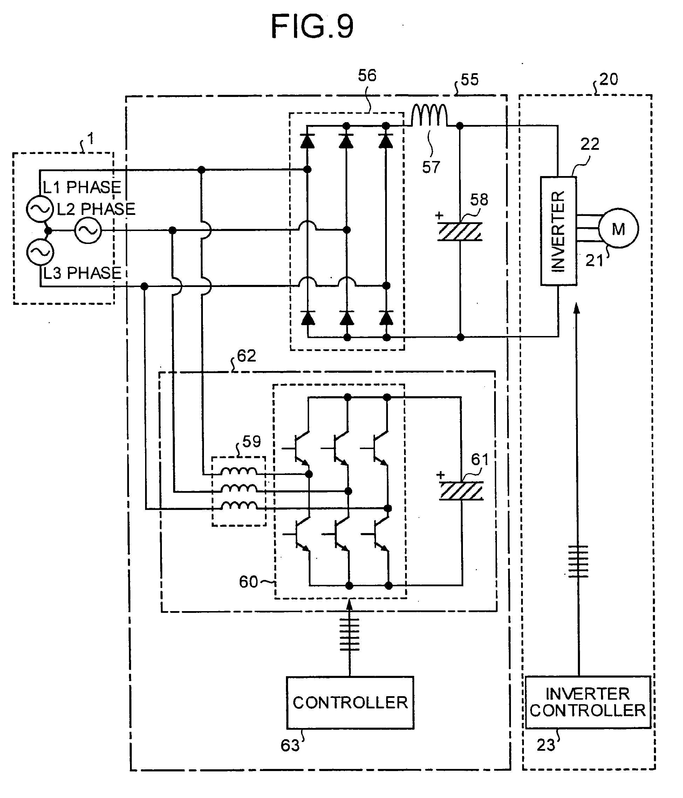

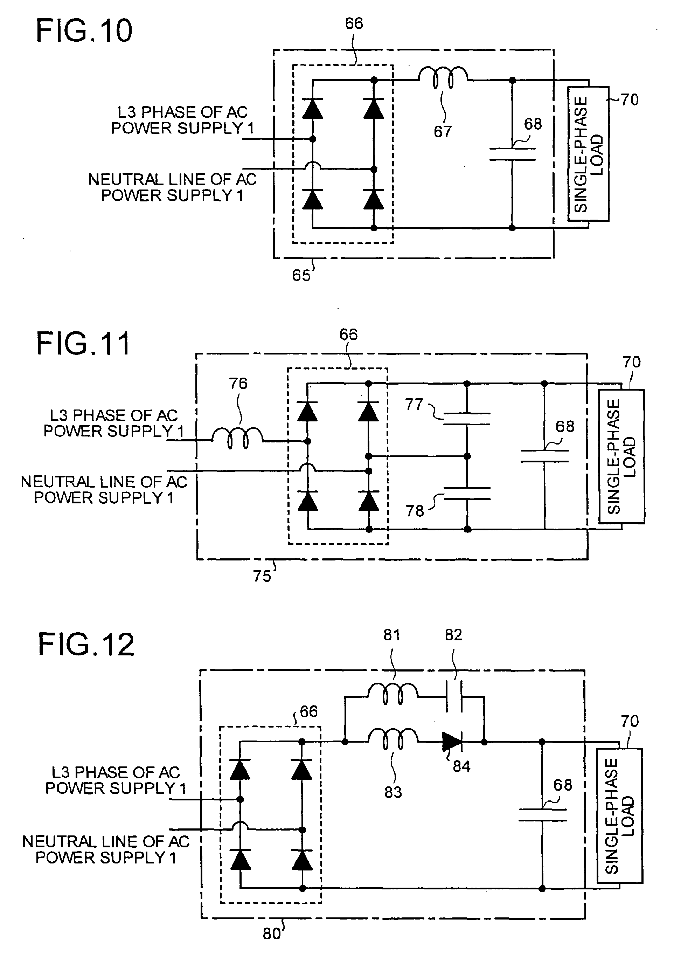

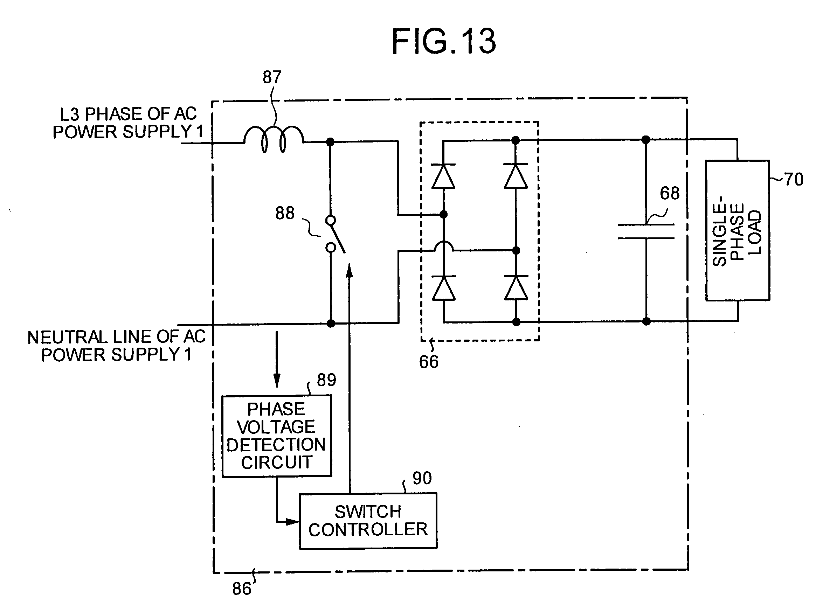

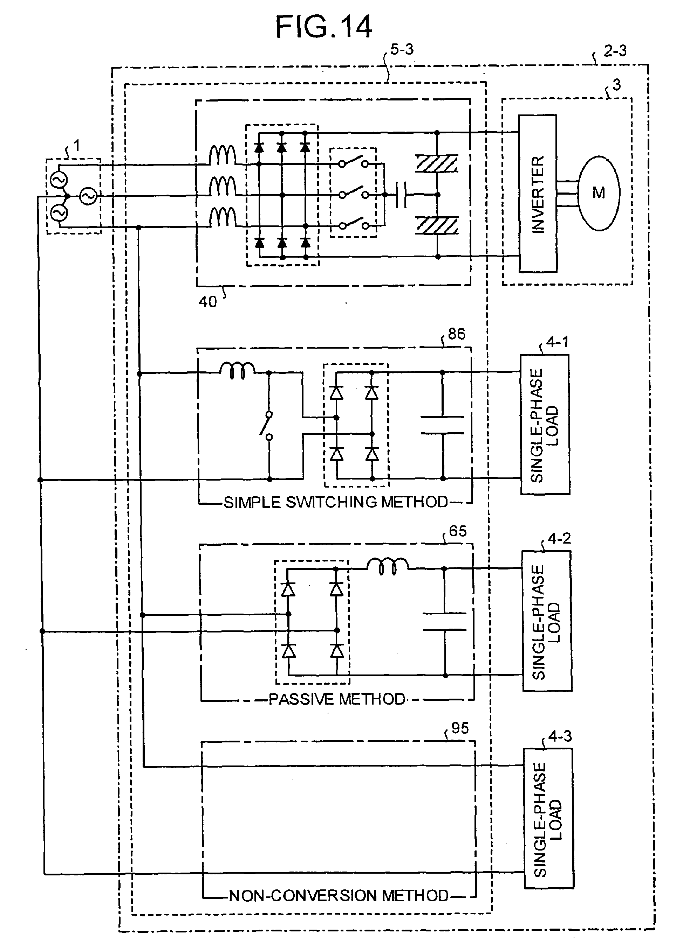

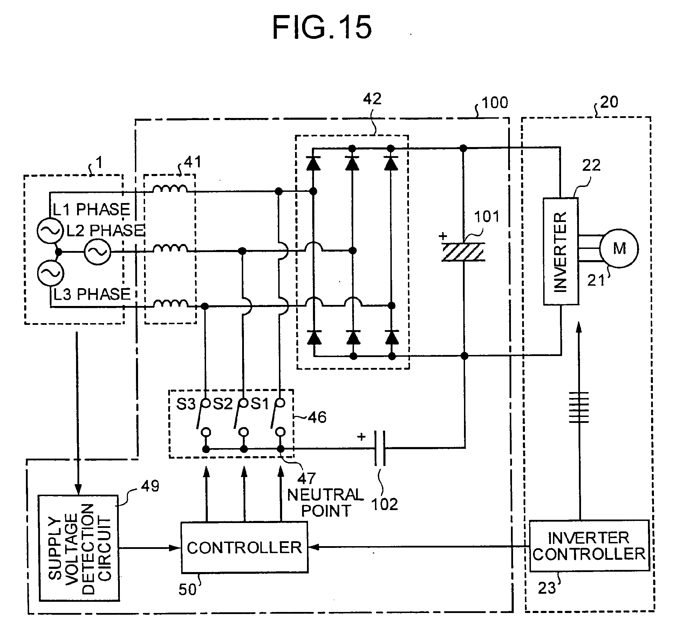

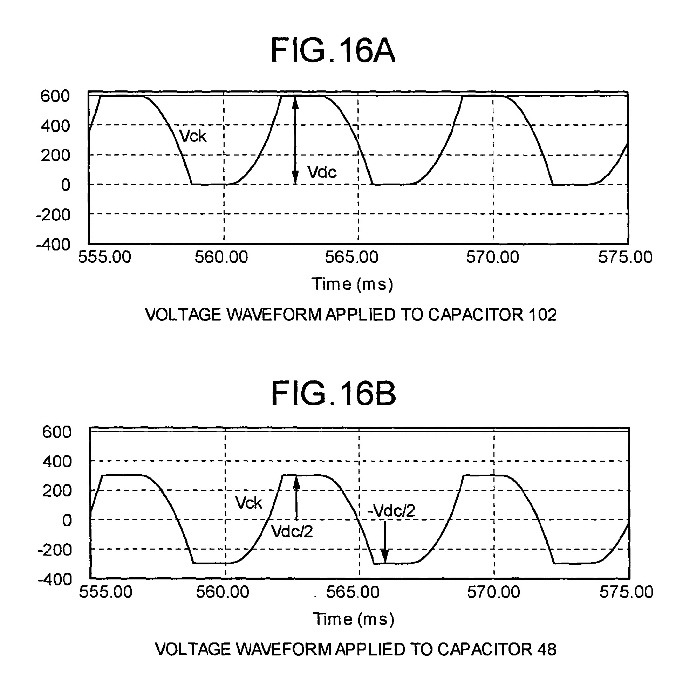

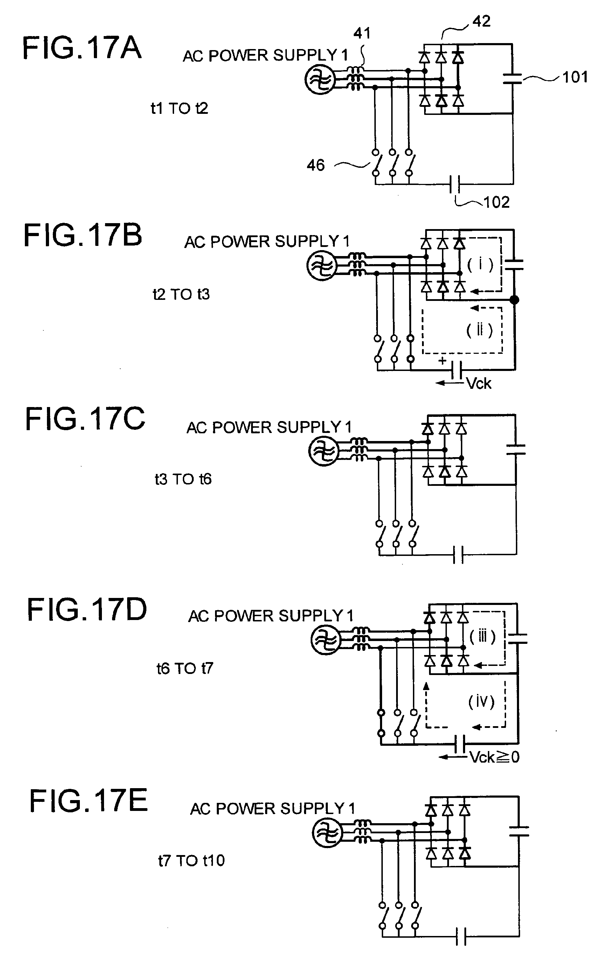

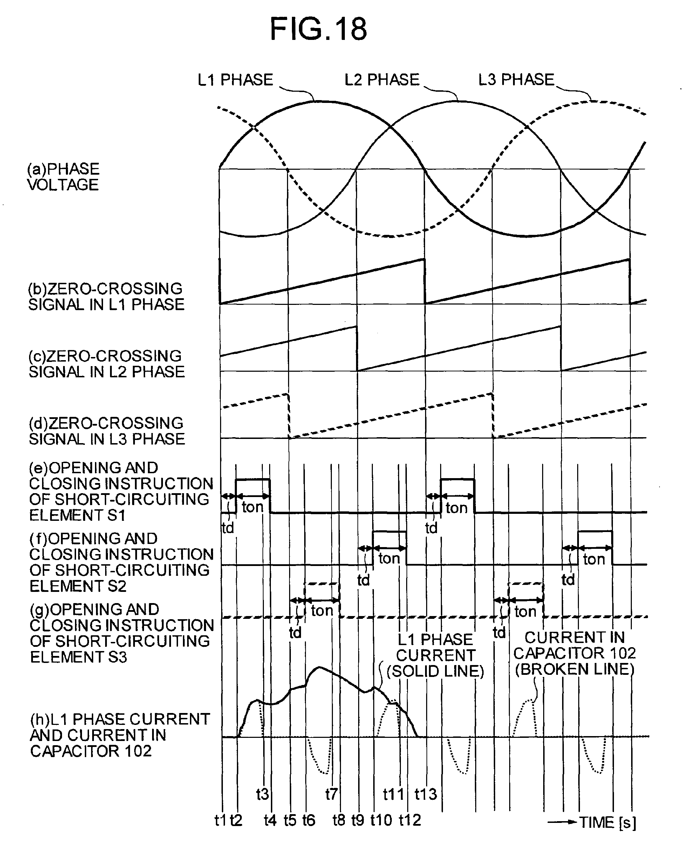

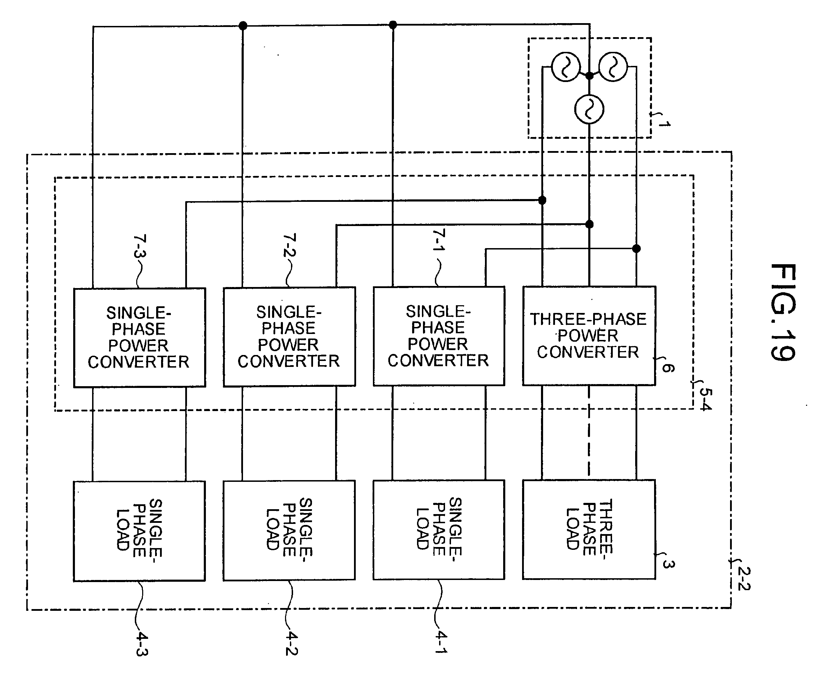

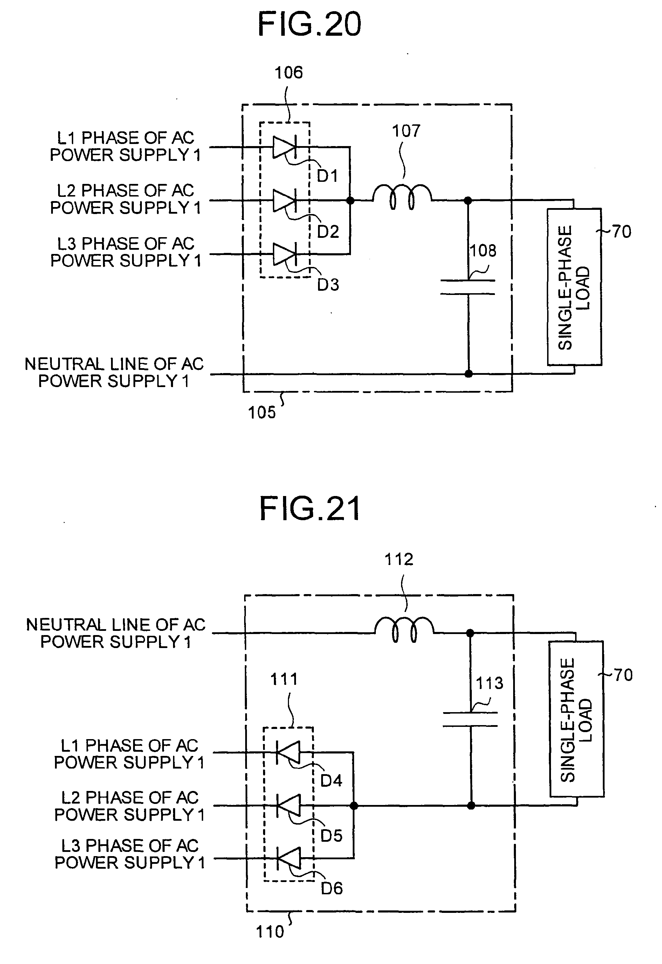

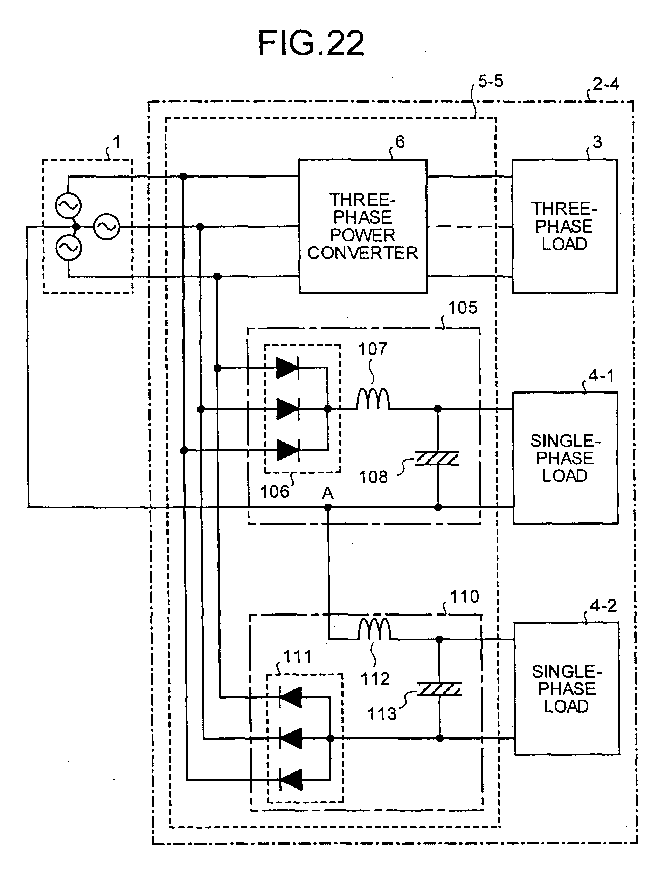

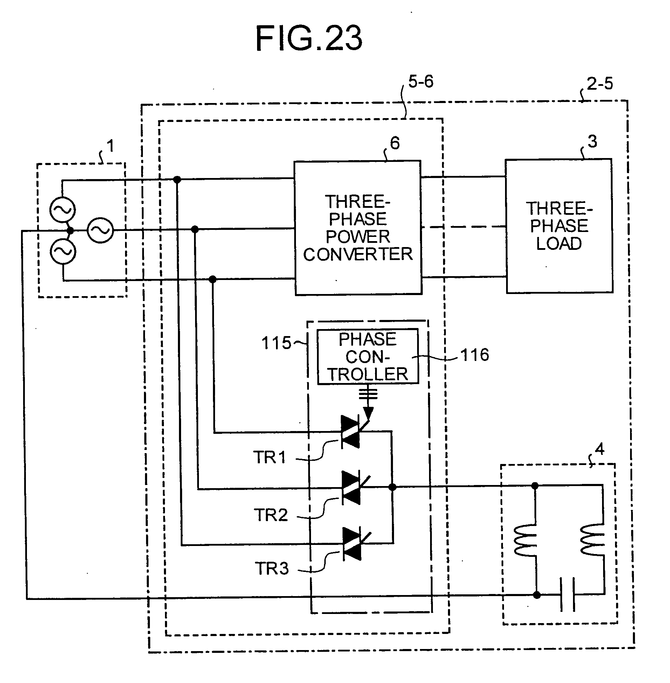

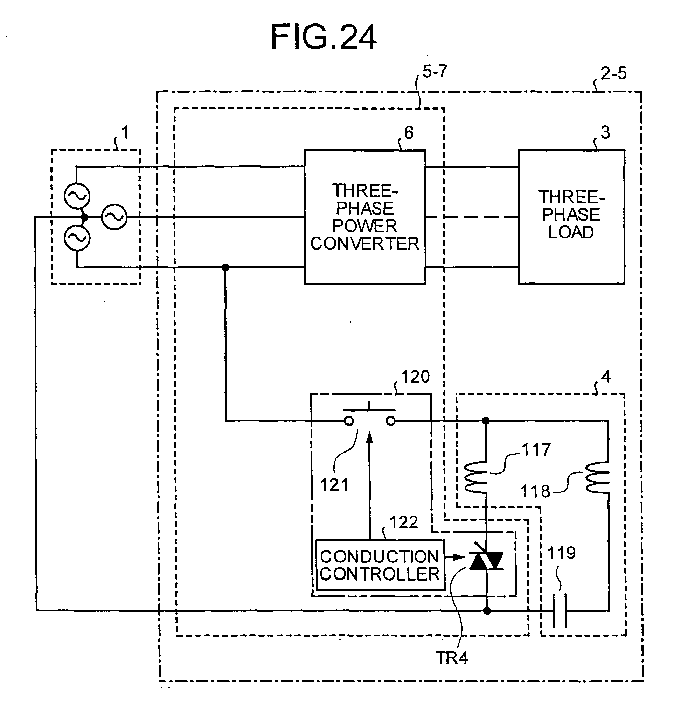

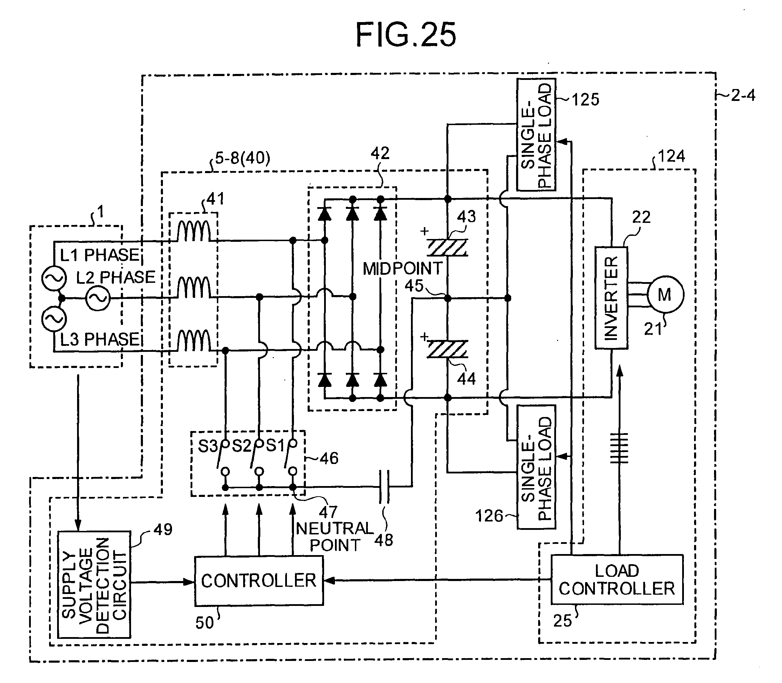

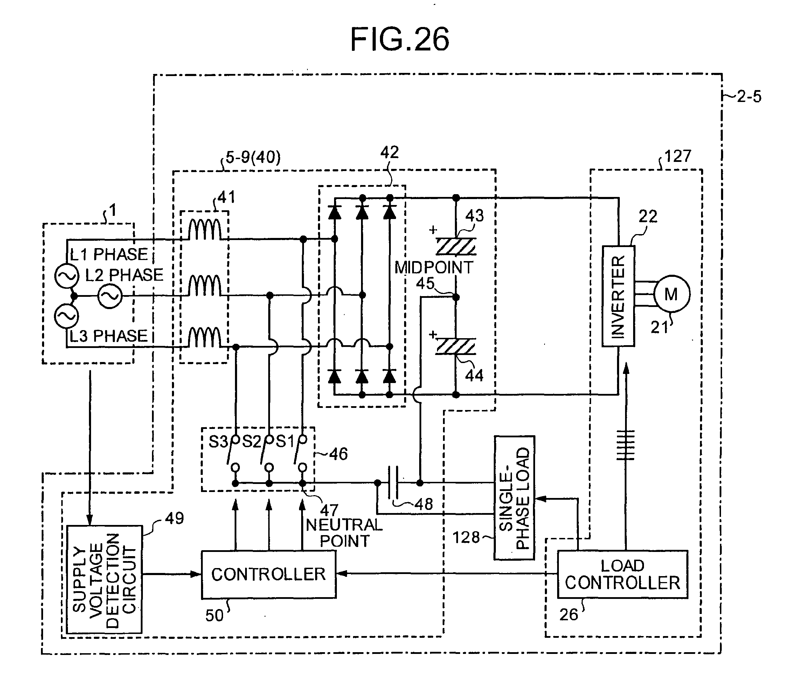

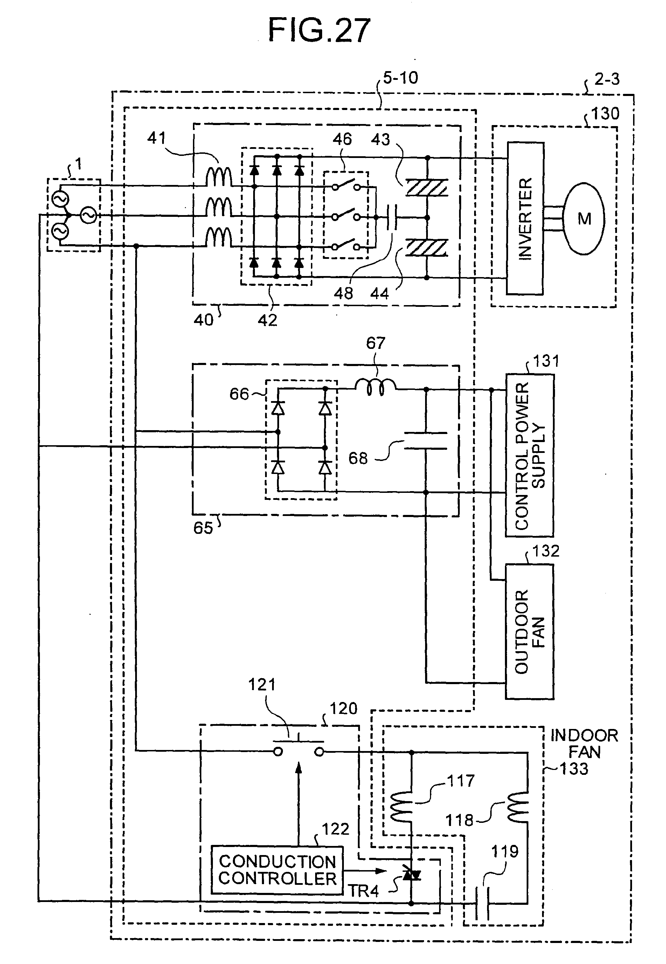

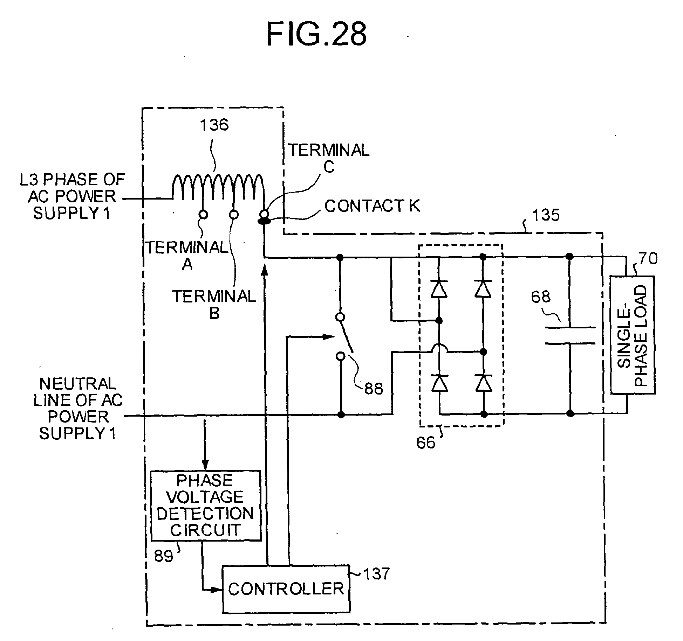

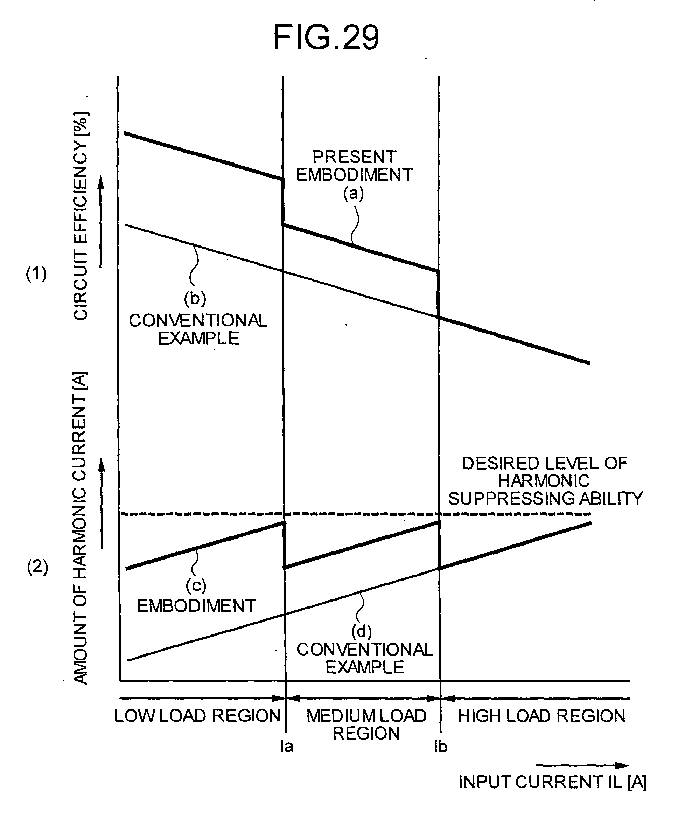

Fig. 1 is a block diagram depicting the basic configuration of a power converter according to a first embodiment of the present invention; Fig. 2 is a flowchart for explaining the configuration procedure of the power converter shown in Fig. 1; Fig. 3 is a diagram of the limits in the current IEC harmonic regulation Class A adopted as an example of the suppression target value of the harmonics in the input current to the system in the procedure shown in Fig. 2; Fig. 4 is a block diagram depicting an example (1) of connection relation between the power converter shown in Fig. 1 and a plurality of loads; Fig. 5 is a block diagram depicting an example (2) of connection relation between the power converter shown in Fig. 1 and a plurality of loads; Fig. 6 is a circuit diagram depicting a specific configuration example (1) of the three-phase power converter shown in Fig. 1; Fig. 7 is a diagram depicting an operating waveform of respective units in the three-phase power converter shown in Fig. 6; Fig. 8 is a characteristic comparing diagram for explaining the importance of the presence of a capacitor that connects a neutral point of the AC power supply and a midpoint of the DC voltage, in the three-phase power converter shown in Fig. 6; Fig. 9 is a circuit diagram depicting a specific configuration example (2) of the three-phase power converter shown in Fig. 1; Fig. 10 is a circuit diagram depicting a specific configuration example (1) of the single-phase power converter shown in Fig. 1. Fig. 11 is a circuit diagram depicting a specific configuration example (2) of the single-phase power converter shown in Fig. 1; Fig. 12 is a circuit diagram depicting a specific configuration example (3) of the single-phase power converter shown in Fig. 1; Fig. 13 is a circuit diagram depicting a specific configuration example (4) of the single-phase power converter shown in Fig. 1; Fig. 14 is a diagram depicting a specific configuration example of the power converter that suppresses harmonics in an input current to the system to a predetermined value or less; Fig. 15 is a circuit diagram depicting a specific configuration example (3) of the three-phase power converter in the power converter according to a second embodiment of the present invention; Fig. 16 is a diagram for explaining the operation of the three-phase power converter shown in Fig. 15; Fig. 17 is a diagram depicting the operating waveform of respective units in the three-phase power converter shown in Fig. 15; Fig. 18 is a diagram in which the operation characteristics of a capacitor that connects the neutral point of the AC power supply and the midpoint of the DC voltage (the DC voltage terminal) in the three-phase power converters shown in Figs. 6 and 15 are compared; Fig. 19 is a block diagram depicting the configuration of the power converter according to a third embodiment of the present invention; Fig. 20 is a circuit diagram depicting a specific configuration example (5) of the single-phase power converter in the power converter according to a fourth embodiment of the present invention, Fig. 21 is a circuit diagram depicting a specific configuration example (6) of the single-phase power converter in the power converter according to a fourth embodiment of the present invention; Fig. 22 is a circuit diagram depicting a configuration example of the power converter, to which the single-phase power converters shown in Figs. 20 and 21 are applied; Fig. 23 is a circuit diagram depicting the configuration of the power converter according to a fifth embodiment of the present invention; Fig. 24 is a circuit diagram depicting the configuration of the power converter according to a sixth embodiment of the present invention; Fig. 25 is a circuit diagram depicting the configuration of the power converter according to a seventh embodiment of the present invention; Fig. 26 is a circuit diagram depicting the configuration of the power converter according to an eighth embodiment of the present invention, Fig. 27 is a circuit diagram depicting the configuration of the power converter according to a ninth embodiment of the present invention; Fig. 28 is a circuit diagram depicting a configuration example (7) of the single-phase power converter in the power converter according to a tenth embodiment of the present invention; and Fig. 29 is a characteristic comparison diagram for explaining the effects when the single-phase power converter shown in Fig. 28 is applied.

### BEST MODE FOR CARRYING OUT THE INVENTION

Exemplary embodiments of a three-phase power converter and a power converter according to the present invention are explained in detail with reference to the accompanying drawings.

### First Embodiment

Fig. 1 is a block diagram depicting the basic configuration of a power converter according to a first embodiment of the present invention. As shown in Fig. 1, a system 2 connected to a three-phase four-wire AC power supply 1 is an optional power utilization system in which a three-phase load 3 supplied with power by a line voltage of three wires excluding a neutral line of the AC power supply 1, and a single-phase load 4 supplied with power by a phase voltage between a specific phase and the neutral line of the AC power supply 1.

A power converter 5 in this invention comprises a three-phase power converter 6 with the input terminal connected to the three wires excluding the neutral line of the AC power supply 1, and the output terminal connected to the input terminal of the three-phase load 3, and a single-phase power converter 7 with the input terminal connected to a specific phase and the neutral line of the AC power supply 1, and the output terminal connected to the input terminal of the single-phase load 4.

The three-phase power converter 6 and the single-phase power converter 7 respectively have a function of either AC-AC conversion function or AC-DC conversion function, and a harmonic suppression function for suppressing the harmonics in the input current to the corresponding load. Fig. 1 depicts an example in which in the connection of the three-phase power converter 6 and the three-phase load 3, when these are connected by two solid lines, the three-phase power converter 6 performs AC-DC conversion to supply a DC voltage to the three-phase load 3, and when these are connected by three lines including a broken line, the three-phase power converter 6 performs AC-AC conversion to supply an AC voltage to the three-phase load 3.

Fig. 2 is a flowchart for explaining the configuration procedure of the power converter 5. The respective harmonic suppression function of the three-phase power converter 6 and the single-phase power converter 7 is set such that the harmonic current input to the whole loads in the system 2 has a predetermined value or less, according to the configuration procedure shown in Fig. 2. The configuration example of the power converter 5 will be specifically explained, with reference to Fig. 2.

In Fig. 2, a predetermined value is set as a suppression target value of the harmonics in the input current to the system 2 (step ST1). The harmonic suppressing method by the three-phase power converter 6 shown in (1) to (4) below is selected (step ST2), corresponding to the predetermined value and the characteristics of the three-phase load 3.

That is, (1) select a high frequency switching method, when the harmonics in the input current to the load generated by the three-phase power converter 6 is extremely larger than the predetermined value, thereby requiring an extremely high harmonic suppressing ability with respect to the three-phase power converter 6. (2) Select a simple switching method, when the harmonics in the input current to the load is larger than the predetermined value to some extent, thereby requiring a high harmonic suppressing ability to some extent with respect to the three-phase power converter 6. (3) Select a passive method, when the harmonics in the input current to the load is not so large with respect to the predetermined value, thereby not requiring high harmonic suppressing ability with respect to the three-phase power converter 6. (4) Select a non-conversion method in which a special element other than wiring is not included, and only a function of transmitting the power is provided, when the harmonics in the input current to the load is small with respect to the predetermined value, thereby not particularly requiring high harmonic suppressing ability, the AC-DC conversion function, and the AC-AC conversion function with respect to the three-phase power converter 6.

There is no clear threshold in the relation between the harmonics in the input current to the load and the predetermined value, being the basis for selection of the method, and the selection relies on the experience of a person who selects the method. The above four methods will be explained later, but generally, the magnitude correlation of the harmonic suppressing ability is: high-frequency switching method>simple switching method>passive method>non-conversion method, and the cost therefor has the same magnitude correlation. Therefore, a method having a slightly lower ability is selected as the method for the three-phase power converter 6, so as not to cause over-specification.

At an operation point A in an assumed operating state of the three-phase load 3, the capacity of the reactor and the capacitor in the selected harmonic suppressing method of the three-phase power converter 6, and the operation of the short-circuiting unit, when the three-phase power converter 6 has the short-circuiting unit, are tuned (step ST3), and it is determined whether the harmonics in the input current to the load generated by the three-phase power converter 6 is equal to or less than the predetermined value (step ST4).

As a result, when the harmonics in the input current to the load is not equal to or less than the predetermined value (step ST4: No), it is checked if the harmonic can be handled by re-tuning of the circuit constant and the operation (step ST5), and if the harmonic can be handled (step ST5: Yes), control returns to step ST3, to perform re-tuning. In this manner, the loop of step ST4 → step ST5 → step ST3 → step ST4 is repeated, to perform tuning of the circuit constant and the operation of the three-phase power converter 6 until the harmonics in the input current to the load becomes equal to or less than the predetermined value (step ST4: Yes).

When the harmonic cannot be handled by re-tuning (step ST5: No), the harmonic suppressing ability of the three-phase power converter 6 is set to be high in the procedure explained at step ST2 (step ST6). Control then returns to step ST3, to repeat re-tuning of the circuit constant and the operation in the harmonic suppressing method having higher suppression ability.

As a result of repeating the processing at steps ST5 and ST6, when the harmonic current component by the three-phase power converter 6 is equal to or less than the predetermined value (step ST4: Yes), the harmonics in the input current to the load generated by the three-phase power converter 6 in the tuning state is subtracted from the predetermined value, to calculate an allowable limit by the single-phase power converter 7 (step ST7).

As in step ST2, as the method having a slightly lower ability, of the high-frequency switching method, the simple switching method, the passive method, and the non-conversion method, is selected as the harmonic suppressing method of the single-phase power converter 7, so as not to cause over-specification, corresponding to the allowable limit and the characteristic of the single-phase load 4 (step ST8). There is no clear threshold in this selection, and the selection relies on the experience of the person who selects the method.

At an operation point B in an assumed operating state of the single-phase load 4, the capacity of the reactor and the capacitor in the selected harmonic suppressing method of the single-phase power converter 7, and the operation of the short-circuiting unit, when the single-phase power converter 7 has the short-circuiting unit, are tuned (step ST9), and it is determined whether the harmonic current component generated by the single-phase power converter 7 is equal to or less than the allowable limit (step ST10).

As a result, when the harmonic current component is not equal to or less than the allowable limit (step ST10: No), it is checked if the harmonic can be handled by re-tuning of the circuit constant and the operation (step ST11), and if the harmonic can be handled (step ST11: Yes), control returns to step ST9, to perform re-tuning. In this manner, the loop of step ST10 → step ST11 → step ST9 → step ST10 is repeated, to perform tuning of the circuit constant and the operation of the single-phase power converter 7 until the harmonic current component becomes equal to or less than the allowable limit (step ST10: Yes).

When the harmonic current component cannot be handled by re-tuning (step ST11: No), it is determined whether the component can be handled by resetting the method of the single-phase power converter 7 (step ST12). As a result, if the component can be handled by resetting the method (step ST12: Yes), the harmonic suppressing method of the single-phase power converter 7 is set high according to the procedure explained at step ST8 (step ST13). Control then returns to step ST9, to repeat re-tuning of the circuit constant and the operation in the harmonic suppressing method having higher suppression ability.

Generally, the single-phase power converter 7 can suppress most of the harmonic current component in the single-phase load 4 by tuning the circuit constant and the operation. Basically, therefore, the harmonic current component by the single-phase power converter 7 can be adjusted to be equal to or less than the allowable limit (step ST10: Yes), according to a series of processing procedures at steps ST9 to ST13. However, if the harmonic current component cannot be handled by resetting the method, or if it is desired to avoid changing the method of the single-phase power converter 7 to a method having higher harmonic suppressing ability (step ST12: No), control returns to step ST2, to redo selection of the harmonic suppressing method of the three-phase power converter 6.

As a result of repeating the processing at steps ST11, ST12, and ST13, when the harmonic current component by the single-phase power converter 7 becomes equal to or less than the allowable limit (step ST10: Yes), it is determined whether the harmonic current component input to the system 2 becomes equal to or less than the predetermined value, without having a change in the hardware configuration of the three-phase power converter 6 and the single-phase power converter 7, even in the operating state other than at a certain operating point A of the three-phase load 3 or at a certain operating point B of the single-phase load 4, assumed at the time of performing series of tuning operation (step ST14).

The change in the hardware configuration stands for a case in which circuit parts are replaced or arrangement is changed physically. When the power converter has the short-circuiting unit such as a relay, a semiconductor switch, or other mechanical switches, and can suppress the harmonics in the input current to a predetermined value only by tuning of the switching operation of these switches in other operating states (step ST14: Yes), it is determined that the tuning of the circuit constant is completed (step ST15), to finish the configuration processing of the power converter 5. On the other hand, when the power converter cannot suppress the harmonics in the input current to the predetermined value only by tuning of the switching operation of these switches (step ST14: No), control returns to step ST2 to change the method of the three-phase power converter 6 or the single-phase power converter 7 to a method having higher harmonic suppressing ability, to perform the series of processing.

Based on the configuration procedure shown in Fig. 2, the power converter 5 having the desired harmonic suppressing ability, which is cheap and does not cause over-specification, can be constructed. It has been explained with reference to Fig. 2 that the method of the three-phase power converter 6 is first selected and tuning of the constant is preferentially performed prior to the single-phase power converter 7. This is because the three-phase power converter 6 has basically a larger number of components, and a cost increase due to the method change is larger than in the single-phase power converter 7. By having such a procedure, the total cost for the power converter 5 can be reduced.

When the cost increase accompanying the method change of the single-phase power converter 7 is larger than that of the three-phase power converter 6, such as when the single-phase load 4 has clearly a larger capacity of the input current to the load, or when the single-phase load 4 has larger harmonics in the input current to the load, it is only necessary to change the configuration procedure of the single-phase power converter 7 and the three-phase power converter 6, and perform tuning of the single-phase power converter 7 preferentially. By doing this, a power converter having a configuration advantageous in cost can be realized.

In Fig. 2, the operating points A and B are explained, as the tuning point of the three-phase power converter 6 and the single-phase power converter 7. For example, when the operating state of the single-phase load 4 changes associated with the operating state of the three-phase load 3, the operating point B may be set to the operating state associated with the operating point A. Further, when the three-phase load 3 and the single-phase load 4 are independently operated, the operating points A and B may be respectively set to an operating point at which the harmonics in the input current becomes tight with respect to the predetermined value set as a requested target value. In this manner, verification with respect to other operating states at step ST14 can be simplified, thereby enabling improvement in the operation efficiency.

At step ST1 in Fig. 2, for example, the limit in the IEC harmonic regulation can be used as a suppression target value of the harmonics in the input current to the system. Fig. 3 depicts the limits in the current (Year 2003) IEC harmonic regulation Class A adopted as an example of the suppression target value of the harmonics in the input current to the system in the procedure shown in Fig. 2. In Fig. 3, the limits are applied to the equipment with the input phase current of equal to or less than 16 amperes, and restricted to a certain value over the whole load region, regardless of the operating state of the load. In such a case, the operating points A and B are respectively set to the maximum load operating state in which the input current to the load is the largest and the harmonic current value becomes the largest, to perform the operation explained with reference to Fig. 2. The harmonic can be then suppressed to the limit even on the light load side where the harmonic current value becomes smaller than the limit, thereby simplifying the verification with respect to other operating states at step ST14.

It has been explained that when the three-phase power converter 6 and the single-phase power converter 7 respectively have the short-circuiting unit, the operation thereof is tuned at step ST3 and at step ST9 shown in Fig. 2. Besides, for example, a power converter may be constructed, which has a control stage at which the operation of the short-circuiting unit is automatically controlled according to the load operating state and the output voltage, by sensing the output voltage of and the input current to the power converter, performing a proportional-plus-integral control for a difference between the output voltage and the output voltage command to generate a sinusoidal input current command, and performing feedback control so that the output voltage agrees with the output voltage command, and the input current becomes sinusoidal synchronous with the input voltage. As a result, verification with respect to other operating states at step ST14 can be also simplified.

In Fig. 1, a simple configuration of the power utilization system 2 in which one three-phase 3 and one single-phase load 4 are present is shown, but specific examples of the power utilization system 2 in the present invention include (1) to (6) below.

That is, (1) the first example is an air conditioner including one three-phase load (compressor), and three single-phase loads (a drive controlled source, an outdoor blower, and an indoor blower). (2) The second example is a multi-air conditioning system having indoor blowers as a plurality of single-phase loads with respect to an outdoor blower being a single-phase load, with respect to the first example. (3) The third example is a large-size refrigeration system including two three-phase loads (two compressors) and three single-phase loads (a drive controlled source and two air distribution fans). (4) The fourth example is a home network system constructed such that the TV, video, refrigerator, air conditioner, air circulation system and the like are connected to form a network and controlled. (5) The fifth example is one factory system operating with a three-phase load group driven by the three-phase power supply as a power source, and a single-phase load group driven by the single-phase power supply as a power source. (6) The sixth example is an area power receiving system that receives power at a high voltage from a power company and supplies electricity to one or a plurality of factories and homes.

In short, the power converter 5 according to the present invention is connected to the three-phase four-wire AC power supply 1, and arranged in a power utilization system in which one or more three-phase loads and one or more single-phase loads are present together. At this time, the connection of a plurality of loads and the power converter 5 is, for example, as shown in Fig. 4 or Fig. 5.

In Fig. 4, when a power utilization system 2-1 connected to the three-phase four-wire AC power supply 1 includes two three-phase loads 3-1, 3-2, and three single-phase loads 4-1, 4-2, and 4-3, a power converter 5-1 is provided for each load, that is, the power converter 5-1 includes two three-phase power converters 6-1 and 6-2, and three single-phase power converters 7-1, 7-2, and 7-3. In other words, the three-phase power converters 6-1 and 6-2 are provided with respect to the two three-phase loads 3-1 and 3-2, in one-to-one correspondence. Further, the single-phase power converters 7-1, 7-2, and 7-3 are provided with respect to the three single-phase loads 4-1, 4-2, and 4-3, in one-to-one correspondence. In this case, the number of components of the power converter 5 agrees with the number of loads.

In Fig. 5, when a power utilization system 2-2 connected to the three-phase four-wire AC power supply 1 includes one three-phase load 3, and three single-phase loads 4-1, 4-2, and 4-3, the power converter 5-1 has a shared form, and hence includes one three-phase power converter 6-1, and three single-phase power converters 7-1, 7-2, and 7-3. In other words, the three-phase power converter 6 is provided with respect to the three-phase load 3. However, with respect to the single-phase load 4-1 of the three single-phase loads 4-1, 4-2, and 4-3, a dedicated single-phase power converter 7-1 is provided, but one single-phase power converter 7-2 is provided with respect to the two remaining single-phase loads 4-2 and 4-3 in a shared form. Though not shown in Fig. 5, when two or more three-phase loads are present, one three-phase power converter can be provided in such a form that two three-phase loads share one three-phase power converter. In this case, the number of components of the power converter 5 is less than the number of loads.

In Fig. 2, for easy understanding, the basic configuration shown in Fig. 1 is used for explanation. The configuration procedure shown in Fig. 2 can be performed as well, even when the number of components of the power converter 5 agrees with the number of loads as shown in Fig. 4, or even when the number of components of the power converter 5 is less than the number of loads as shown in Fig. 5. The power converter 5 can be formed so that the added value of the input current to the respective loads, that is, the harmonics value in the whole input current to the system becomes equal to or less than a predetermined value.

In short, in the power utilization system 2 connected to the three-phase four-wire AC power supply 1, in which one or more three-phase loads and one or more single-phase loads are present together, the power converter 5 according to the present invention has such a configuration that a single-purpose power converter (that is, the three-phase power converter and the single-phase power converter) having either one function of AC-AC conversion function and AC-DC conversion function, and a harmonic suppression function is arranged in a required place in a required number.

When the configuration in which the single-purpose power converter is arranged in a required place in a required number is to be determined, the harmonic suppression function held by all three-phase power converters and single-phase power converters, that is, a predetermined inexpensive harmonic suppressing method suitable for the application place can be employed in the procedure shown in Fig. 2, so that the added value of the harmonic included in the input current to the respective loads, that is, the value of harmonic included in the input current to the system becomes equal to or less than the predetermined value. As a result, cost reduction can be achieved, without causing over-specification.

The single-phase power converter and the single-phase load have a configuration such that power is supplied from a phase voltage between a specific phase and the neutral line of the AC power supply 1. Therefore, these can be formed of elements having a lower resisting pressure, than that of the case in which power is supplied from a line voltage of the AC power supply 1, or from a DC voltage obtained by rectifying the AC power supply 1, and hence a cost reduction can be achieved also from this point of view. In addition, as shown in Fig. 5, by adopting the shared form, the number of parts can be reduced, and the power converter having a simple configuration can be obtained at a low cost.

A specific configuration example of the respective elements of the power converter (three-phase power converter and single-phase power converter) according to the present invention will be first explained. First, a specific configuration example of the three-phase power converter will be explained, with reference to Figs. 6 to 8. Fig. 6 is a circuit diagram depicting a specific configuration example (1) of the three-phase power converter shown in Fig. 1. Fig. 7 depicts the operating waveform of the respective units in the three-phase power converter shown in Fig. 6. Fig. 8 is a characteristic comparing diagram for explaining the importance of the presence of the capacitor that connects a neutral point of the AC power supply and a midpoint of the DC voltage, in the three-phase power converter shown in Fig. 6.

In Fig. 6, the AC power supply 1 is a Y-type three-phase AC power supply, from which respective phases of L1 phase, L2 phase, and L3 phase are extracted. A three-phase load 20 is a type requiring a DC voltage, including an AC motor 21, an inverter 22 that generates a three-phase alternating voltage from the DC voltage and supplies the three-phase alternating voltage to the AC motor 21, and an inverter controller 23 that controls the operation of the AC motor 21 via the inverter 22. Therefore, the three-phase power converter 40 is a type having the AC-DC conversion function.

Fig. 6 depicts a configuration example of the three-phase power converter having the harmonic suppression function of the three-phase simple switching method explained in the selection of the three-phase power converter in the configuration procedure shown in Fig. 2. This circuit configuration can be regarded as an optional part that can be completely added later by adding a portion including the short-circuiting unit to the three-phase full-wave rectifier circuit, known as a general passive method. Therefore, it is a very advantageous configuration for the re-selection of the three-phase power converter (step ST6) explained in Fig. 2.

That is, the three-phase power converter 40 includes a three-phase full-wave rectifier circuit known as the general passive method, including three reactors 41 with one end connected to respective phases of the three-phase AC power supply 1, a three-phase rectifier 42 that rectifies the respective phase voltages of the three-phase AC power supply 1, input from the other ends of the three reactors 41, and two smoothing capacitors 43 and 44 serially connected to between the DC output terminals of the three-phase rectifier 42. The inverter 22 in the three-phase load 20 is connected to the both terminals of the two smoothing capacitors 43 and 44. In the three-phase power converter 40 including such a general three-phase full-wave rectifier circuit, a short-circuit 46 including three short-circuiting elements S1 to S3, being the short-circuiting unit, a capacitor 48, a power supply voltage detection circuit 49, and a controller 50 are added.

The respective one terminal of the three short-circuiting elements S1 to S3 is respectively connected to a connection line between the three reactors 41 and each phase of the three-phase rectifier 42, and the other terminal thereof is commonly connected to form a neutral point 47 of the AC power supply. The capacitor 48 is arranged so as to come between the neutral point 47 of the AC power supply formed in the short-circuit 46 and a midpoint 45 of the serially connected two smoothing capacitors 43 and 44.

The short-circuiting elements S1 to S3 constituting the short-circuit 46 are bilateral short-circuiting unit. The short-circuiting elements S1 to S3 are, for example, (1) the one formed of a triac, being a bilateral conduction element, (2) the one formed by combining a diode bridge and a one-way conductive short-circuiting element, such as an IGBT, a bipolar transistor, or a MOSFET, or (3) the one formed by serially connecting two of those obtained by connecting a diode and the one-way conductive short-circuiting element, such as the IGBT, bipolar transistor, or MOSFET, in anti-parallel.

The power supply voltage detection circuit 49 detects a phase voltage zero-crossing point of, for example, the L1 phase of the three-phase AC power supply 1 by hardware, and generates a phase voltage zero-crossing signal for other phases (L2 phase and L3 phase) by internal processing, based on phase sequence information assumed beforehand, so that a zero-crossing detection difference becomes small, to provide the signal to the controller 50. By having such a configuration, the hardware configuration can be simplified than detecting the phase voltage zero-crossing signal for all phases by the hardware, thereby realizing small size and low cost of the apparatus, and a reduction in detection error between phases due to the performance difference of the elements constituting the hardware.

By setting the internal processing frequency fz of the power supply voltage detection circuit 49 to a multiple of the half cycle of the power supply frequency, that is, when the power supply frequency is designated as fs, to fz=2·n·fs (n: integer), the internal processing synchronizes with the respective voltage zero-crossing point of a specific phase. As a result, a zero-crossing difference due to the processing error occurring between the first half cycle and the latter half cycle can be reduced. Further, when the number of phases of the AC power supply 1 is designated as N, by setting the internal processing frequency fz to fz=2·n·N·fs, the internal processing can be performed so as to synchronize with the respective voltage zero-crossing points of all phases of the AC power supply. As a result, a zero-crossing difference due to the processing error occurring between phases can be reduced, thereby enabling an improvement in the detection accuracy of the phase voltage zero-crossing point.

The power supply voltage detection circuit 49 may be constructed so as to presume the phase voltage by detecting the line voltage zero-crossing point of the AC power supply 1 by hardware. However, an error at the time of presumption can be excluded by constructing the power supply voltage detection circuit 49 so as to detect the phase voltage zero-crossing point directly by the hardware, enabling accurate and reliable detection, and realization of highly reliable phase voltage zero-crossing detection.

Further, the power supply voltage detection circuit 49 detects only the L1 phase by the hardware and generates other phases based on the phase sequence information presumed beforehand. In this case, the power supply voltage detection circuit 49 can be constructed inexpensively, but at the time of reversed connection, the circuit may perform the switching operation at an unexpected timing, thereby causing a failure of the system and a serious accident. Therefore, it is better to detect and generate the phase sequence information after connection, to provide a safe and reliable power converter.

The controller 50 has switching patterns suitable for the load operating state as a table in advance, and transmits a closing instruction to the short-circuit 46 after a first delay time from the phase voltage zero-crossing signal from the power supply voltage detection circuit 49, and transmits an opening instruction to the short-circuit 46 after a second delay time after the completion of charging to the capacitor 48, so as to obtain a switching pattern corresponding to the load information input from the inverter controller 23, thereby operating the short-circuiting elements S1 to S3 connected to the respective phases once during the half cycle of the power supply. The switching pattern is provided so as to realize suppression of the harmonics in the input current and an improvement in the power factor of the power supply, by forcing the short-circuit current to flow to a region where the phase current does not flow in a general three-phase full-wave rectifier circuit, via the short-circuit 46 and the capacitor 48.

For reference, the operating waveform of the respective units will be explained. In Fig. 7, when the phase sequence of the three-phase AC power supply 1 is L1 phase, L2 phase, and L3 phase, the operating waveforms of the phase voltage, designating 0 degree of the phase of the phase voltage of the L1 phase as the reference clock, the supply voltage detection circuit 49, and the controller 50 are shown. In Fig. 7, a waveform (a) depicts the waveforms of the respective phase voltage of the L1 phase, L2 phase, and L3 phase of the three-phase AC power supply 1. Waveforms (b), (c), and (d) are respectively a zero-crossing signal in the L1 phase voltage, a zero-crossing signal in the L2 phase voltage, and a zero-crossing signal in the L3 phase voltage generated by the supply voltage detection circuit 49. The respective waveforms are sawtooth waveforms linearly rising with a certain inclination during the half cycle of the phase voltage, and steeply falling down at a change point to the next half cycle, that is, the zero-crossing point, designating the half cycle of the phase voltage as one cycle. The zero-crossing point of the phase voltage can be detected at the fall of the respective signals.

The waveforms (e), (f), and (g) are respectively control instructions provided by the controller 50 to the short-circuiting element S1 connected to the L1 phase, the short-circuiting element S2 connected to the L2 phase, and the short-circuiting element S3 connected to the L3 phase. The respective control instructions are signals that rise to an H level from the detected zero-crossing point of the phase voltage with a first delay time td, fall down to an L level after having maintained the H level for a second delay time ton, and maintain the L level until detecting the next zero-crossing point of the phase voltage. The corresponding short-circuiting element closes circuit when the control instruction rises to the H level, and opens circuit when the control instruction falls to the L level.

In a waveform (h), solid line shows the waveform of the phase current flowing in the L1 phase, and broken line shows the waveform of the phase current flowing in the capacitor 48 with opening and closing of the short-circuit 46. The flow interrupted section in the general three-phase full-wave rectifier circuit can be reduced, and the input phase current can be improved to a waveform close to the sinusoidal wave, as shown in the figure, by a series of operation of switching the respective short-circuiting elements once during the half cycle of the power supply.

The effects of opening and closing the short-circuit 46 after the completion of charging to the capacitor 48 will be explained, with reference to Fig. 8. In Fig. 8, the short-circuit current accompanying the operation of the short-circuit 46 in the region from time t2 to t3 shown in Fig. 7 is extracted and shown. Fig. 8(a) depicts the relation characteristic between the short-circuit current and time when the capacitor 48 is not used, and Fig. 8(b) depicts the relation characteristic between the short-circuit current and time when the capacitor 48 is used.

In Fig. 8(a), when the capacitor 48 is not used, the short-circuit current accompanying the operation of the short-circuit 46 flows only for the amount corresponding to a potential difference between the neutral point 47 of the AC power supply and the midpoint 45 of the smoothing capacitors 43 and 44. Therefore, at the OFF timing of the short-circuit 46, a current variation di/dt abruptly changes, thereby causing a sharp flux change. Due to the sharp flux change and the electromagnetic force by the short-circuit current, vibrations are generated in the winding and an iron core, thereby causing unpleasant noise in the reactor 41.

On the other hand, in Fig. 8(b), when the capacitor 48 is used, the current variation di/dt decreases as the capacitor 48 is charged, thereby smoothing a current peak point. As a result, the sharp flux change caused when the capacitor 48 is not used can be alleviated, to reduce a change in the electromagnetic force. As a result, noise in the reactor 41 due to switching can be reduced. By using the capacitor 48, since the current peak value at the time of switching can be reduced, protection against over-current can be realized at a low cost and with a simple mechanism. That is, the short-circuit 46 can have a long service life.

Since the short-circuit current is allowed to flow via the capacitor 48, the switching current does not flow automatically, after completion of charging to the capacitor 48. At this time, since the short-circuit 46 is opened, a zero-current switch can be realized. By switching at the time of zero current, the generated noise can be reduced, thereby reducing a switching loss at the time of turn-off. Further, an improvement in the circuit efficiency can be expected by a reduction in the switching loss, thereby enabling electric power saving.

In addition, since accurate control of the short-circuiting elements with respect to turn-off is not necessary, the load on the control processing can be reduced, thereby enabling the use of an inexpensive CPU. Further, since electric charges charged at the time of previous switching are discharged as the short-circuit current at the time of next switching, the electromagnetic energy can be accumulated in the reactor 41 by much more short-circuit current. Therefore, higher DC voltage can be obtained than in the case of not using the capacitor 48. As a result, a plurality of effects can be obtained by using the capacitor 48.

However, an excessive pressure rise of the DC voltage due to too much amount of charging to the capacitor 48, an increase in the harmonics in the input current, and deterioration in the power factor of the power supply may be caused, or on the contrary, the amount of charging to the capacitor 48 may be too small to reduce the harmonics in the input current and improve the power factor of the power supply sufficiently, according to the operating state of the load and the set value of the circuit constant. Therefore, when an inverter load having a varying amount of load is connected, the capacitor 48 needs only to be constructed so that the capacity thereof can be changed by a plurality of capacitive elements and an electric contact-switching element such as a relay, and the capacity of the capacitor 48 can be controlled according to the load information from the controller 50, such that the capacity of the capacitor 48 decreases in a low load region, but increases in a high load region. As a result, the effects of the capacitor 48 can be fully extracted in the whole load region.

The capacitor 48 is not essential and may be omitted. Even in this case of omitting the capacitor 48, the effect of suppressing the harmonics in the input current and improving the power factor of the power supply can be obtained by the operation of the short-circuiting elements S1 to S3 once in the half cycle of the power supply. In this case, the effects of reducing the noise in the reactor and reducing the switching noise due to the zero-current switch described above as the effects of using the capacitor 48 cannot be obtained, and accurate OFF control of the short-circuit 46 becomes necessary.

In the above explanation, the controller 50 transmits an opening instruction to the short-circuit 46, after completion of charging to the capacitor 48. However, the short-circuit 46 may be opened before charging to the capacitor 48 is completed. In this case, the effects become equal to a case of not using the capacitor 48. Therefore, the effects of reducing the noise in the reactor and reducing the switching noise due to the zero-current switch described above as the effects of using the capacitor 48 cannot be obtained, and accurate OFF control of the short-circuit 46 becomes necessary.

However, in the low load region, since the input current to the load decreases, undesired sound and noise due to switching hardly occur, and there is a load region where suppression of harmonics and an improvement in the power factor-improving ability can be realized by opening the short-circuit 46 to control the charged amount to the capacitor 48. Therefore, a three-phase power converter having low undesired sound and low noise, and high harmonic suppressing ability over the whole load region can be obtained by combining the control method, such that in the high load region, the short-circuit 46 is opened after completion of charging to the capacitor 48, and in the low load region, the short-circuit 46 is opened before completion of charging to the capacitor 48.

The controller 50 may control the short-circuit 46 so as to be opened or closed twice or more in the half cycle of the power supply. Also in this case, the effects of suppressing the harmonics in the input current and improving the power factor of the power supply can be obtained by a simple switching operation. In this case, accurate OFF control of the short-circuit 46 becomes necessary, but an increase in the control load is little, and the circuit size does not increase. Therefore, in Fig. 6, it is shown that the controller 50 is singly provided in the three-phase power converter 40, but the inverter controller 23 may include the function of the controller 23 and the controller 50 may be omitted. On the contrary, the controller 50 may include the inverter control function, and the inverter controller 23 may be omitted.

In the above explanation, the controller 50 has the switching patterns suitable for the operating state of the load as a table beforehand. However, the controller 50 may detect the DC voltage, the power factor of the power supply, the input current and the like and feedback-control these, to provide the switching patterns. Likewise, the effects of suppressing the harmonics in the input current and improving the power factor of the power supply can be obtained by a simple switching operation. It has also been explained that the phase voltage zero-crossing point is the reference for the opening and closing instruction of the short-circuit 46 generated by the controller 50. However, the reference needs not be the zero-crossing point, and needs only to be the same timing in the half cycle of the phase voltage. For example, the reference may be a peak point in the phase voltage, or an optional timing point in the phase voltage.

The supply voltage detection circuit 49 has been explained to have a function of generating the zero-crossing signal in the respective phase voltages. However, the supply voltage detection circuit 49 may only transmit a detection signal by the hardware to the controller 50, and the controller may include the function of generating the zero-crossing signal in the respective phase voltages.

In the above explanation, the load information input to the controller 50 is a signal from the inverter controller 23, but any other signals that can presume the operating state of the load may be used. For example, though not shown, an input current signal, an inverter current detection signal, a DC voltage detection signal, a DC voltage ripple detection signal, or an input voltage detection signal, detected by an ACCT or other current sensors, or an output torque signal or number of revolutions of the AC motor 21 may be used as the load information instead of the signal from the inverter controller 23.

The above is an explanation for the three-phase power converter having the three-phase simple switching method. However, as explained in the configuration procedure shown in Fig. 2, the present invention also includes the three-phase power converter having the high frequency switching method, the three-phase power converter having the passive method, and the three-phase power converter having the non-conversion method. These will be explained below.

Fig. 9 is a circuit diagram depicting a specific configuration example (2) of the three-phase power converter shown in Fig. 1. In Fig. 9, an active filter method is shown as one example of the high frequency switching method. The three-phase load 20 includes, as shown in Fig. 6, the AC motor 21, the inverter 22 that generates a three-phase alternating voltage from the DC voltage and supplies the three-phase alternating voltage to the AC motor 21, and the inverter controller 23 that controls the operation of the AC motor 21 via the inverter 22, and is a type requiring the DC current.

In Fig. 9, in a three-phase power converter 55,an active filter circuit 62 is provided parallel with the three-phase full-wave rectifier circuit including a three-phase rectifier 56 directly connected to the respective phases of the three-phase AC power supply 1 to rectify the respective phase voltages, a main reactor 57 with one end connected to the anode output terminal of the three-phase rectifier 56, and a smoothing capacitor 58 connected to between the other end of the main reactor 57 and the cathode output terminal of the three-phase rectifier 56. A controller 63 that controls the active filter circuit 62 is also provided.

The active filter circuit 62 includes three reactors 59 with one end connected to each phase of the three-phase AC power supply 1, a short-circuit 60 in which only three pairs of the series circuit including upper arm short-circuiting elements and lower arm short-circuiting elements are provided in parallel, and an end connection between the upper arm short-circuiting elements and the lower arm short-circuiting elements is respectively connected to the other ends of the three reactors 59, and a smoothing capacitor 61 connected to the both terminals of the series circuit of the upper arm short-circuiting elements and the lower arm short-circuiting elements in the short-circuit 60.

The controller 63 allows the upper arm short-circuiting elements and the lower arm short-circuiting elements constituting the short-circuit 60 to perform high frequency switching operation respectively, to perform control such that a compensation current is allowed to flow to the active filter circuit 62 so that the input current to the three-phase power converter 55 has the sinusoidal waveform synchronous with the supply voltage.

The high frequency switching method also includes a method referred to as a full bridge, which makes the respective short-circuiting elements perform high frequency switching operation, so that the input current becomes the sinusoidal wave synchronous with the supply voltage, by connecting the short-circuiting elements parallel with the respective diode elements constituting the three-phase rectifier in the general three-phase full-wave rectifier circuit shown in Fig. 6. Further, the passive method is a method in which the short-circuiting elements are not used at all, as in the three-phase full-wave rectifier circuit shown in Fig. 6. The non-conversion method is a method having a function of only transmitting the power of the AC power supply to the three-phase load.

A difference between the high frequency switching method and the simple switching method is mainly in the switching frequency. As the switching frequency increases, the harmonic suppressing ability increases, but the amount of generation of switching noise increases. Therefore, these two methods are classified, designating the switching frequency of 4 kilohertz as the boundary, from the standpoint of function and cost. The one switching in the frequency equal to or higher than 4 kilohertz is referred to as the high frequency switching method, and the one switching in the frequency lower than 4 kilohertz is referred to as the simple switching method.

The four methods have a difference in the harmonic suppressing ability and the cost, due to the number of parts constituting the respective method, the switching frequency, and noise countermeasure parts. As explained in the configuration procedure shown in Fig. 2, there is generally a relation of high frequency switching method>simple switching method>passive method>non-conversion method, in both the suppressing ability and the cost. From the standpoint of selecting a method that does not cause over-specification, corresponding to the characteristic of the three-phase load, selection of the simple switching method explained in Fig. 6 is most inexpensive and has a realistic configuration, when the current IEC harmonic regulation value for the equipment having the input phase current equal to or less than 16 amperes shown in Fig. 3 is designated as a target level of the harmonic suppressing ability of the system.

A specific configuration example of the single-phase power converter will be explained next. In the present invention, the single-phase power converter also has the four methods, the high frequency switching method, the simple switching method, the passive method, and the non-conversion method, as in the three-phase power converter. The passive method will be explained herein with reference to the drawings, and explanation for other three methods will be added in the course thereof.

In Fig. 1, the single-phase power converter 7 supplies power to the single-phase load 4 by a single-phase alternating voltage between a certain phase and the neutral line of the AC power supply 1. When the single-phase load 4 is a load requiring the DC voltage as in the inverter, it can be constructed, for example, as shown in Figs. 10 to 12. These are the configuration examples of the passive method, in which the short-circuiting elements are not used.

Fig. 10 is a circuit diagram depicting a specific configuration example (1) of the single-phase power converter shown in Fig. 1. In Fig. 10, a single-phase power converter 65 includes a single-phase rectifier 66 in which the neutral line and, for example, the L3 phase of the AC power supply 1 are connected, a reactor 67 with one end thereof connected to the anode terminal of the single-phase rectifier 66, and a smoothing capacitor 68 connected between the other end of the reactor 67 and the cathode terminal of the single-phase rectifier 66, and supplies power to a single-phase load 70 by rectifying a single-phase alternating voltage between the neutral line and the L3 phase of the AC power supply 1.

The reactor 67 here is arranged to enlarge the conduction angle. When the inductance value thereof is set to a large value, the apparatus itself becomes large, but the harmonic suppressing ability can be increased. On the contrary, when the inductance value is set to a small value, the apparatus can be formed compact and at a low cost, but the harmonic suppressing ability decreases. Therefore, the value of the reactor 67 is selected so that the harmonic suppressing ability of the single-phase power converter 65 becomes a desired level. In Fig. 10, it is explained that the reactor 67 is arranged on the DC side of the single-phase rectifier 66, but the similar effect can be obtained when it is arranged on the AC side of the single-phase rectifier 66.

Fig. 11 is a circuit diagram depicting a specific configuration example (2) of the single-phase power converter shown in Fig. 1. Fig. 12 is a circuit diagram depicting a specific configuration example (3) of the single-phase power converter shown in Fig. 1. The single-phase power converter can be constructed so as to suppress the harmonic current by utilizing the resonance phenomena of the reactor and the capacitor, as shown in Figs. 11 and 12.

In Fig. 11, the single-phase power converter 75 includes a reactor 76 with the one end connected to, for example, the L3 phase of the AC power supply 1, a single-phase rectifier 66 in which the other end of the reactor 76 and the neutral line of the AC power supply 1 are connected, serially connected two capacitors 77 and 78 arranged between the anode terminal and the cathode terminal of the single-phase rectifier 66, and a smoothing capacitor 68 arranged parallel with the serially connected two capacitors 77 and 78, and the end connection of the serially connected two capacitors 77 and 78 is connected to the neutral line of the AC power supply 1.

According to the configuration shown in Fig. 11, by utilizing the charging and discharging characteristics of the serially connected two capacitors 77 and 78, expansion of the conduction angle of the input current, reduction in the harmonic current, and an improvement in the power factor can be realized, as compared with the configuration shown in Fig. 10. The capacitors 77 and 78 here are set to have a capacity such that charging and discharging are performed within several milliseconds in order to effectively use the charging and discharging characteristics, but generally, it is set to a capacity of not larger than one tenth of the capacity of the smoothing capacitor 68.

In the single-phase power converter 80 shown in Fig. 12, a series circuit of a reactor 81 and a capacitor 82, and a series circuit of a reactor 83 and a diode 84 are provided in parallel connection, instead of the reactor 67 in the configuration shown in Fig. 10. According to this configuration, by utilizing the charging and discharging characteristics of the capacitor 82, expansion of the conduction angle of the input current, reduction in the harmonic current, and an improvement in the power factor can be realized, as compared with the configuration shown in Fig. 10. Therefore, as in the case shown in Fig. 11, the capacitor 82 is set to have a capacity such that charging and discharging are performed within several milliseconds in order to effectively use the charging and discharging characteristics, but generally, it is set to a capacity of not larger than one tenth of the capacity of the smoothing capacitor 68.

Fig. 13 is a circuit diagram depicting a specific configuration example (4) of the single-phase power converter shown in Fig. 1. In Fig. 13, a configuration example of the simple switching method in which a short-circuiting element is included, and this short-circuiting element is operated once or several times in the half cycle of the power supply. In the single-phase power converter 86 shown in Fig. 13, a reactor 87 is provided between the L3 phase of the AC power supply 1 and a corresponding alternating input terminal of the single-phase rectifier 66, in the configuration shown in Fig. 10. Further a two-way conductive short-circuiting element 88 is provided between the end connection of the corresponding alternating input terminal of the single-phase rectifier 66 and the reactor 87, and the neutral line of the AC power supply 1. Further, a phase voltage detection circuit 89 that detects a phase voltage zero-crossing point of the AC power supply 1, and a switch controller 90 that controls the short-circuiting element 88 so as to operate once or several times in the half cycle of the power supply, based on the zero-crossing signal from the phase voltage detection circuit 89 are provided.

According to the configuration shown in Fig. 13, expansion of the conduction angle of the input current, reduction in the harmonic current, and an improvement in the power factor can be further realized, as compared with the configuration shown in Fig. 10, by forcing the short-circuit current to flow to the short-circuiting element 88. The switch controller 90 here controls the short-circuiting element 88 based on the single-phase load information by which the operating state of the single-phase load can be presumed, as the controller 50 shown in Fig. 6, but the single-phase load information is omitted in Fig. 13. The signal, being the operation reference of the short-circuiting element 88, may not be necessarily the phase voltage zero-crossing signal, and may be a signal by which a specific timing of the phase voltage can be detected. For example, a phase voltage peak signal may be used. Further, the phase voltage detection circuit 89 may not be particularly provided, and a signal from the supply voltage detection circuit 49 in the three-phase power converter 40 may be used instead. In addition, the controller 50 of the three-phase power converter 40 may perform the function of the switch controller 90. In this case, since the phase voltage detection circuit 89 and the switch controller 90 are not required, the apparatus can be simplified, and cost reduction can be realized.

The arrangement spot of the reactor 87 and the short-circuiting element 88 need only to be determined so that the AC power supply 1 is short-circuited by the short-circuiting element 88 via the reactor 87. Therefore, as shown in Fig. 13, other than the case in which the reactor 87 is arranged on the AC side of the single-phase rectifier 66, only the short-circuiting element 88 may be arranged on the DC side of the single-phase rectifier 66, or both of the reactor 87 and the short-circuiting element 88 may be arranged on the DC side. At this time, when the short-circuiting element 88 is arranged on the DC side, the short-circuiting element 88 may be formed of a one-way conductive element. Further, a back current prevention diode that prevents the smoothing capacitor 68 from being short-circuited, at the time of operation of the short-circuiting element 88, is provided between the short-circuiting element 88 and the smoothing capacitor 68.

As explained for the three-phase power converter, when the inductance value of the reactor 87 is set to a large value, the apparatus itself becomes large, but the harmonic suppressing ability can be increased. On the contrary, when the inductance value is set to a small value, the apparatus can be formed compact and at a low cost, but the harmonic suppressing ability decreases. Therefore, the value of the reactor 67 is selected so that the harmonic suppressing ability of the single-phase power converter becomes a desired level.

Though not shown, in the circuit configuration of the simple switching method shown in Fig. 13, by adding an input current and DC voltage feedback controller, a single-phase power converter of the high frequency switching method that controls short-circuit of the short-circuiting elements at a high frequency can be constructed. Further, the single-phase power converter of the non-conversion method is constructed so that the input AC power supply is directly transmitted to the single-phase load without providing the short-circuiting elements. The single-phase power converter of the non-conversion method is chosen when there is no need to rectify, such as when the single-phase load is the AC motor, and it is not necessary to suppress the harmonic.

As the method that can be performed by the single-phase power converter, four methods, that is, the passive method, the simple switching method, the high frequency switching method, and the non-conversion method, are mentioned as for the three-phase power converter. However, as explained in the configuration procedure shown in Fig. 2, these have the relation of high frequency switching method>simple switching method>passive method>non-conversion method, in both the suppressing ability and the cost. Therefore, the configuration of the single-phase power converter is selected for each single-phase load, corresponding to the generated amount of the harmonic current in the connected single-phase load, desired harmonic suppressing ability, and cost, as in the three-phase power converter, and as shown in Fig. 14, the power converter may be configured so that the harmonics in the input current are suppressed to a predetermined value as the whole system.

Fig. 14 depicts a specific configuration example of the power converter that suppresses the harmonics in the input current to the system to a predetermined value or less. In Fig. 14, a power utilization system 2-3 is a system having one three-phase load 3, and three single-phase loads 4-1, 4-2, and 4-3. The three-phase power converter 40 of the simple switching method shown in Fig. 6 is selected for the three-phase load 3. In the three-phase power converter 40, only the main parts are illustrated. A single-phase power converter 86 of the simple switching method shown in Fig. 13 is selected for the single-phase load 4-1. In the single-phase power converter 86, only the main parts are illustrated. A single-phase power converter 65 of the passive method shown in Fig. 10 is selected for the single-phase load 4-2. A single-phase power converter 95 of the non-conversion method is selected for the single-phase load 4-3.

Thus, according to the first embodiment, in the power utilization system connected to the three-phase four-wire AC power supply, in which a three-phase load and a single-phase load are present together, a power converter having the necessity minimum harmonic suppressing ability in such a form that the three-phase power converter and the single-phase power converter respectively share the function with respect to the desired harmonic suppressing ability as the whole system can be configured. Accompanying therewith, the apparatus can be prevented from becoming too large, and an unnecessary cost increase can be reduced. Further, since the three-phase power converter of the inexpensive simple switching method can be employed with respect to the three-phase load, and the single-phase loads and the single-phase power converters can be formed pf elements having a low resisting pressure, the whole system can be made small and a cost reduction can be realized.

### Second Embodiment

Fig. 15 is a circuit diagram depicting a specific configuration example (3) of the three-phase power converter in the power converter according to a second embodiment of the present invention. In Fig. 15, the same or like components as those shown in Fig. 6 are designated by like reference signs. The parts relating to the second embodiment will be mainly explained below.

As shown in Fig. 15, in a three-phase power converter 100 according to the second embodiment, one smoothing capacitor 101 is provided instead of the serially connected two smoothing capacitors 43 and 44 in the configuration shown in Fig. 6, and a capacitor 102 is put between the other end (cathode terminal) of the smoothing capacitor 101 connected to the cathode terminal of a three-phase rectifier 42 and the neutral point 47 of the AC power supply. In the connection between the capacitor 102 and the smoothing capacitor 101, opposite to the example shown in Fig. 15, the capacitor 102 may be connected to one end (anode terminal) of the smoothing capacitor 101 connected to the anode terminal of the three-phase rectifier 42. That is, the three-phase power converter 100 according to the second embodiment has a configuration in which the number of parts is reduced, with respect to the configuration shown in Fig. 6.

The operation of the three-phase power converter 100 according to the second embodiment having the above configuration will be explained, with reference to Figs. 15 to 18. Fig. 16 is a diagram for explaining the operation of the three-phase power converter shown in Fig. 15. Fig. 17 depicts the operating waveform of the respective units in the three-phase power converter shown in Fig. 15. Fig. 18 is a diagram in which the operation characteristics of the capacitor that connects the neutral point of the AC power supply and the midpoint of the DC voltage (the DC voltage terminal) in the three-phase power converters shown in Figs. 6 and 15 are compared.

When the phase sequence of the three-phase AC power supply 1 is L1 phase, L2 phase, and L3 phase, Fig. 17 depicts the operating waveforms of the phase voltage, designating 0 degree of the phase of the phase voltage in the L1 phase as the reference clock, the supply voltage detection circuit 49, and the controller 50. In Fig. 16, the three-phase rectifier 42 and the short-circuit 46 connected to the AC power supply 1, the smoothing capacitor 101 provided between the DC output terminals of the three-phase rectifier 42, and the capacitor 102 put between the cathode terminal (DC voltage terminal) of the three-phase rectifier 42 and the midpoint of the AC power supply formed by the short-circuit 46 are shown, and the circuit condition corresponding to the operating time and the transition state of the current path are also shown. The circuit condition corresponding to the operating time and the transition state of the current path are also shown. The operating time (t1, to t2, t2 to t3, t3 to t6, t6 to t7, t7 to t10) corresponds to the time shown in Fig. 17. In Fig. 16, the phase sequence of the AC power supply 1 is, as shown in Fig. 15, L1 phase, L2 phase, and L3 phase from above.

The respective operating waveforms of the respective units will be first explained. In Fig. 17, a waveform (a) depicts the waveforms of the respective phase voltage of the L1 phase, L2 phase, and L3 phase of the three-phase AC power supply 1. Waveforms (b), (c), and (d) are respectively a zero-crossing signal in the L1 phase voltage, a zero-crossing signal in the L2 phase voltage, and a zero-crossing signal in the L3 phase voltage, generated by the supply voltage detection circuit 49. The respective waveforms are sawtooth waveforms linearly rising with a certain inclination during the half cycle of the phase voltage, and steeply falling down at a change point to the next half cycle, that is, the zero-crossing point, designating the half cycle of the phase voltage as one cycle. The zero-crossing point of the phase voltage can be detected at the fall of the respective signals.

The waveforms (e), (f), and (g) are respectively control instructions provided by the controller 50 to the short-circuiting element S1 connected to the L1 phase, the short-circuiting element S2 connected to the L2 phase, and the short-circuiting element S3 connected to the L3 phase. The respective control instructions are signals that rise to an H level from the detected zero-crossing point of the phase voltage with a first delay time td, fall down to an L level after having maintained the H level for a second delay time ton, and maintain the L level until detecting the next zero-crossing point of the phase voltage. The corresponding short-circuiting element closes circuit when the control instruction rises to the H level, and opens circuit when the control instruction falls to the L level. In a waveform (h), solid line shows the waveform of the phase current flowing in the L1 phase, and broken line shows the waveform of the phase current flowing in the capacitor 102 with opening and closing of the short-circuit 46, wherein the direction flowing to the reactor 59 or the capacitor 102 from the left in Fig. 15 is designated as a positive direction of the current.

In Fig. 16, in the circuit state (a): during the operating time t1 to t2, three short-circuiting elements in the short-circuit 46 are all off. Therefore, in this time zone, since it is the general three-phase full-wave rectifier circuit formed of the AC power supply 1, the reactor 59, the three-phase rectifier 42, and the smoothing capacitor 101, when the L1 phase voltage is 0 volt, the current flows through the route of L3 phase → three-phase rectifier 42 → smoothing capacitor 101 → three-phase rectifier 42 → L2 phase, and does not flow to the L1 phase.

In the circuit state (b): during the operating time t2 to t3, the controller 50 controls so as to close only the short-circuiting element S1 connected to the L1 phase of the short-circuit 46, after a certain delay time td (see Fig. 17) from the zero-crossing point of the L1 phase. According to such control, a current (A) flows through the route of L3 phase → three-phase rectifier 42 → smoothing capacitor 101 → three-phase rectifier 42 → L2 phase, and a switching current (B) flows through the route of L1 phase → reactor 59 → short-circuit 46 → capacitor 102 → three-phase rectifier 42 → L2 phase, to charge the capacitor 102. As a result, the current can flow to the respective phases, thereby eliminating the zone where the phase current does not flow in the three-phase rectifier.

In the circuit state (c): during the operating time t3 to t6, as the time passes, and the L1 phase voltage increases, the current flowing from the L3 phase to the L2 phase in the circuit state (b) starts to flow from the L1 phase to the L2 phase. The capacitor 102 is set to have a capacity such that the charging of the capacitor 102 is completed within the time required for changing the current flow. That is, the capacity Ck of the capacitor 102 is set to one-several tenth or one-several hundredth of the capacity Cf of the smoothing capacitor 101. The controller 50 opens the short-circuiting element S1 after the charging completion time of the capacitor 102 has passed. Therefore, when charging of the capacitor 102 has been completed, the switching current (B) stops to flow.

In the circuit state (d): during the operating time t6 to t7, the L3 phase voltage is close to 0 volt, and according to the relation of the respective phase voltages, the current does not flow to the L3 phase. Therefore, the controller 50 controls so as to close the short-circuiting element S3 connected to the L3 phase in the short-circuit 46. Therefore, a current (C) flows through the route of L1 phase → three-phase rectifier 42 → smoothing capacitor 101 → three-phase rectifier 42 → L2 phase, and a switching current (D) flows through the route of L1 phase → reactor 59 → three-phase rectifier 42 → smoothing capacitor 101 → capacitor 102 → short-circuit 46 → L3 phase, to eliminate the zone where the phase current does not flow in the three-phase rectifier. The switching current (D) continues to flow until the charges accumulated in the capacitor 102 have been discharged in the state that the switching current (B) is flowing.

In the circuit state (e): during the operating time t7 to t10, as the time passes, the switching current (D) stops to flow with the discharge of the capacitor 102. At this time, as the L3 phase voltage increases on the negative side, the current flowing from the L1 phase to the L2 phase decreases, and starts to flow from the L1 phase to the L3 phase, and hence the L2 phase becomes the section where the current does not flow.

In the state transition described above, in the transition from the circuit state (b) to the circuit state (c), there is the possibility that the short-circuiting element connected to the L1 phase of the short-circuit 46 closes, though all three short-circuiting elements in the short-circuit 46 should be opened essentiality as during time t3 to t4 shown in Fig. 17, between the circuit state (b) and the circuit state (c), according to the delay time set in advance or the capacity of the capacitor 102. In Fig. 16, though the diagram is omitted, even in such a case, the capacitor 102 having finished charging and discharging can perform the same action as in the case in which all three short-circuiting elements in the short-circuit 46 are in the opened state. The same thing applies to the transition from the circuit state (d) to the circuit state (e).

The above explanation expresses the operation in which the voltage phase of the L1 phase is from 0 degree to about 2π/3. Thereafter, the operation shifts to the control of the short-circuiting element S2 connected to the L2 phase in the section where the current does not flow. By repeating such operation for the three phases, one cycle of the power supply is formed, and the phase current can have a shape close to the sinusoidal wave as denoted by (h) in Fig. 17.

The characteristic point in the series of operation is the charging and discharging current route of the capacitor 102. When charging the capacitor 102, the current does not flow via the smoothing capacitor 101, and when discharging the capacitor 102, the current flows via the smoothing capacitor 101. Due to the difference in the charging and discharging current route of the capacitor 102, the occurrence of even-ordered harmonic is particularly concerned. To be considered here is a combined capacitance C in the current route, designating the capacity of the capacitor 102 as Ck, and the capacity of the smoothing capacitor 101 as Cf. When the capacitor 102 is charged, C=Ck. When the capacitor 102 is discharged, C=Ck/(1+(Ck/Cf)). As described above, since it is set to Ck«Cf, C**Ck. Therefore, since the influence of unbalance due to the difference between the charging and discharging routes is very small that does not cause a problem, the input current harmonic suppressing ability and the power factor of the power supply improving ability equal to those in the configuration shown in Fig. 6 can be obtained substantially.

As differences in the circuit characteristics between the second embodiment (Fig. 15) and Fig. 6, the following two points can be mentioned. The first point is the current route described above, and the second point is the applied voltage to the capacitor 102. This will be explained with reference to Fig. 18. Fig. 18(a) depicts the waveform of a voltage Vck applied to the capacitor 102 in the second embodiment, and Fig. 18(b) depicts the waveform of the voltage Vck applied to the capacitor 48 shown in Fig. 6.

In the circuit shown in Fig. 6, the capacitor 46 is charged by the current flowing from the midpoint 45 toward the neutral point 47 of the AC power supply and the current flowing from the neutral point 47 of the AC power supply toward the midpoint 45, for each switching in the short-circuiting elements S1 to S3 of the short-circuit 46. Therefore, when it is assumed that the DC voltage between the both output terminals of the three-phase rectifier 42 is Vdc, the alternating voltage of Vdc/2 is applied to the capacitor 46, as shown in Fig. 18(b). On the other hand, in the circuit shown in Fig. 15, since one end (the right end in the figure) of the capacitor 102 is connected to the cathode terminal of the DC output terminal of the three-phase rectifier 42, the both terminals of the capacitor 102 may have 0 volt, but the right end does not have a higher potential than the left end, and as shown in Fig. 18(a), only the voltage having the positive polarity is applied. Therefore, in the circuit shown in Fig. 6, a symmetric capacitive element like a film capacitor is required, while an asymmetric inexpensive capacitive element like an aluminum electrolytic capacitor may be used, in the circuit shown in Fig. 15.

That is, according to the second embodiment, a cost reduction of the circuit can be realized. Further, in the second embodiment, it is not necessary to form the midpoint of the DC voltage, that is, it is not necessary to serially connect two smoothing capacitors between the output terminals of the three-phase rectifier 42, and the circuit can be realized by one smoothing capacitor. Therefore, the three-phase power converter can be constructed with a smaller and cheaper configuration than that of the circuit shown in Fig. 6. Also in the second embodiment, the effects of reducing the electromagnetic noise due to the capacitor 102 and reducing the switching noise, and a pressure rising effect of the DC voltage can be obtained, as in the first embodiment (Fig. 6).

As in the explanation referring to Fig. 6, the circuit may be formed so that the capacity of the capacitor 102 can be changed corresponding to the load variation, and switching may be performed in a plurality of times during the half cycle of the power supply. The control method may be combined so that the short-circuit 46 is opened after charging completion of the capacitor 102 in the high load region, and the short-circuit 46 is opened before charging completion of the capacitor 102 near the low load region. By such a configuration, the three-phase power converter having low noise and high harmonic suppressing ability over the whole load regions can be obtained by inexpensive switching control. However, when the effects by the capacitor 102, that is, reduction in the electromagnetic noise accompanying the turn-off of the short-circuit 46, reduction in the switching noise, and reduction in the even-ordered harmonic due to the asymmetric current route generated for each switching are not required, the capacitor 102 may be omitted.

In Fig. 15, the capacitor 102 is connected to the cathode output terminal of the three-phase rectifier 42, but may be connected to the anode output terminal. Further, the capacitor 102 may not be connected to the output terminal of the three-phase rectifier 42, but may be connected to a node between two switching elements serially connected between the output terminals of the three-phase rectifier 42, so that the two switching elements are alternately opened and closed, in agreement with the charging and discharging cycle of the capacitor 102. By such a configuration, the asymmetry of the route can be suppressed, and hence the similar effects can be obtained, though the number of parts increases. Also in this case, when the electromagnetic noise reduction effect and the switching noise reduction effect by the capacitor 102 are not required, the capacitor 102 may be omitted.

### Third Embodiment

Fig. 19 is a block diagram depicting the configuration of the power converter according to a third embodiment of the present invention. In Fig. 19, when the power utilization system 2-2 connected to the three-phase four-wire AC power supply 1 has one three-phase load 3, and three single-phase loads 4-1, 4-2, and 4-3, a power converter 5-4 includes, same as the 5-1 shown in Fig. 4, one three-phase power converter 6, and three single-phase power converters 7-1, 7-2, and 7-3, in one-to-one correspondence, so as to suppress the addition of the input current to the respective loads, that is, harmonics in the input current to the system to a predetermined value. However, the power supply method to the three single-phase power converters 7-1, 7-2, and 7-3 is different from the method in the power converter 5-1 shown in Fig. 4.

That is, the single-phase power converter 7-1 is supplied with a single-phase voltage between the neutral line of the AC power supply 1 and the L1 phase of the AC power supply 1. The single-phase power converter 7-2 is supplied with a single-phase voltage between the neutral line of the AC power supply 1 and the L2 phase of the AC power supply 1. The single-phase power converter 7-3 is supplied with a single-phase voltage between the neutral line of the AC power supply 1 and the L3 phase of the AC power supply 1.

Thus, when the specific phase of the AC power supply 1 used for power supply to the three single-phase power converters 7-1, 7-2, and 7-3 is different for each single-phase power converter, the unbalance in the input current to the system between the respective phases of the AC power supply 1 can be reduced, and the harmonic current generated from the specific phase (for example, L3 phase) in the first embodiment can be distributed to other phases (L1 phase and L2 phase). As a result, when the harmonic suppressing level is to be set with respect to the whole phases, such as the IEC harmonic regulation shown in Fig. 3, the power converter 5-4 can be configured so as to conform to the regulation by the three-phase power converter 6 and the single-phase power converters 7-1, 7-2, and 7-3 having lower harmonic suppressing ability, thereby enabling realization of small size and cost reduction of the apparatus.

A specific example will be explained. For example, it is assumed that the fifth-order harmonic current with the IEC harmonic regulation limit being 1.14 amperes (see Fig. 3) is flowing to the single-phase power converters 7-1, 7-2, and 7-3 in an amount of 0.2 amperes. In this case, as in the first embodiment, when the single-phase power converters 7-1, 7-2, and 7-3 are connected to the same L3 phase, the fifth-order harmonic current in the L3 phase becomes 0.6 amperes. Therefore, in order to obtain the power converter conforming to the harmonic regulation, the three-phase power converter 6 must have the harmonic suppressing ability capable of suppressing the fifth-order harmonic current flowing therein to a value equal to or less than 0.54 amperes, which is a value obtained by subtracting the fifth-order components 0.6A by the single-phase power converters 7-1, 7-2, and 7-3 from the regulated value 1.14 amperes. And hence, it is necessary to make the reactor for the harmonic suppression very large and reselect the method. In this case, with respect to the L1 phase and the L2 phase, there is a reserve of 0.6 amperes, and hence it becomes over-specification.

On the other hand, as in the third embodiment, when the single-phase power converters 7-1, 7-2, and 7-3 are connected to different phases, the fifth-order harmonic current becomes 0.2 amperes in all phases. Therefore, in order to obtain the power converter conforming to the harmonic regulation, the three-phase power converter 6 needs only to have the harmonic suppressing ability capable of suppressing the fifth-order harmonic current flowing therein to a value equal to or less than 0.94 amperes, which is a value obtained by subtracting the fifth-order components 0.2A by the single-phase power converters 7-1, 7-2, and 7-3 from the regulated value 1.14 amperes. Further, this configuration can avoid the state in which only a certain phase (L1 phase and L2 phase) becomes over-specification. Therefore, the configuration is cheaper than that in the first embodiment, thereby enabling realization of small size and cost reduction of the apparatus.

In Fig. 19, for easy understanding, it is explained that the three single-phase power converters 7-1, 7-2, and 7-3 are supplied with power from different phases. However, it is not always necessary to connect these to different phases, and for example, only the single-phase power converter 7-1 is connected to the L1 phase, and other single-phase power converters 7-2 and 7-3 may be connected to the L3 phase. When there are four or more single-phase loads, the number of the single-phase power converters accordingly exceeds four. In this case, the connection may be such that the number of power converters connected to a certain phase becomes different. In short, the three phases may be appropriately used so that only a specific phase of the AC power supply 1 is not used, but the current harmonics in the respective phases are well balanced.

### Fourth Embodiment

Figs. 20 and 21 are diagrams depicting specific configuration examples of the single-phase power converter in the power converter according to a fourth embodiment of the present invention. In the third embodiment, a configuration example in which the respective single-phase power converters are connected to different phases to suppress the unbalance between the respective phase currents is shown. In the fourth embodiment, such a configuration example is shown that the respective single-phase power converters are supplied with power from the respective phases of the AC power supply 1 in a good balance.

In Fig. 20, a single-phase power converter 105 that supplies DC voltage to a single-phase load 70 of a type requiring the DC voltage includes a three-phase half-wave rectifier circuit 106 including diodes D1 to D3, with the anode thereof connected to the respective phases of the AC power supply 1, and the cathode being commonly connected, a reactor 107 with one end thereof connected to a common end connection of the cathodes of the diodes D1 to D3, and a smoothing capacitor 108 connected between the other end of the reactor 107 and the neutral line of the AC power supply 1, wherein the DC current is obtained by rectifying the positive polarity of the respective phase voltages of the AC power supply 1.

In Fig. 21, the single-phase power converter 110 that supplies the DC voltage to the single-phase load 70 of a type requiring the DC voltage includes a three-phase half-wave rectifier circuit 111 formed of diodes D4 to D6, with the cathode thereof being connected to the respective phases of the AC power supply 1, and the anode being commonly connected, a reactor 112 with one end thereof being connected to the neutral line of the AC power supply 1, and a smoothing capacitor 113 connected between the common end connection of the diodes D4 to D6 and the other end of the reactor 112, so as to obtain the DC voltage by rectifying the negative polarity of the respective phase voltages of the AC power supply 1.

By having such a configuration, the single-phase power converter 105 is supplied with power in a good balance from the phase voltages of all phases of the AC power supply 1. As a result, the unbalance in the input current between the respective phases can be reduced, thereby enabling realization of small size and cost reduction of the apparatus, as in the third embodiment. However, it is more effective than in the third embodiment regarding reduction in the unbalance in the input current between the respective phases.

In other words, in the third embodiment, the input current from the respective phases of the AC power supply may not be distributed in a good balance, according to the number and the operating state of single-phase loads constituting the system and the connection status to the AC power supply 1. On the other hand, in the fourth embodiment, since the respective single-phase loads are supplied with power from all phases of the AC power supply 1, the input current from the respective phases of the AC power supply 1 can be distributed, with better balance than in the third embodiment, regardless of the number and the operating state of single-phase loads.

However, unbalance in the current occurs between the positive and negative polarities, since there is no power supply with the negative polarity of the AC power supply 1 in the configuration shown in Fig. 20, and since there is no power supply with the positive polarity of the AC power supply 1 in the configuration shown in Fig. 21, and hence the even-ordered harmonic may be generated more or less.

Fig. 22 is a circuit diagram depicting a configuration example of the power converter, to which the single-phase power converters shown in Figs. 20 and 21 are applied. In Fig. 22, when a power utilization system 2-4 connected to the three-phase four-wire AC power supply 1 includes one three-phase load 3, and two single-phase loads 4-1 and 4-2, in a power converter 5-5, a three-phase power converter 6 is provided with respect to the three-phase load 3, and the single-phase power converters 105 and 110 respectively shown in Figs. 20 and 21 are provided with respect to the two single-phase loads 4-1 and 4-2, so that the addition of the input current to the respective loads, that is, the harmonics in the input current to the system is suppressed to a predetermined value.

Thus, by using both of the single-phase power converter 105 that DC-converts the positive polarity of the respective phase voltages of the AC power supply 1, and the single-phase power converter 110 that DC-converts the negative polarity of the respective phase voltages, to arrange the single-phase loads in a good balance, the unbalance in the current between the positive and the negative polarities of the AC power supply 1 can be reduced, and the even-ordered harmonic can be reduced more than by using only one of the single-phase power converters 105 and 110.

In Fig. 22, one reactor may be arranged on a node A and the neutral line of the AC power supply 1 in the figure, so that the functions of the reactors 107 and 112 are held by the same element. In this case, the reactors 107 and 112 can be omitted, thereby enabling a cost reduction.

### Fifth Embodiment

Fig. 23 is a circuit diagram depicting the configuration of the power converter according to a fifth embodiment of the present invention. In Fig. 23, when a power utilization system 2-5 connected to the three-phase four-wire AC power supply 1 includes one three-phase load 3, and one single-phase load 4 driven by phase control, in a power converter 5-6, the three-phase power converter 6 is provided with respect to the three-phase load 3, and a single-phase power converter 115 is provided with respect to single-phase load 4, so that the addition of the input current to the respective loads, that is, the harmonics in the input current to the system is suppressed to a predetermined value.

The single-phase power converter 115 includes short-circuiting elements TR1 to TR3, with one end thereof being connected to the respective phases of the AC power supply 1, and the other end being connected so as to form the neutral point of the AC power supply 1, and a phase controller 116 that controls the short-circuiting elements TR1 to TR3. The short-circuiting elements TR1 to TR3 are two-way conductive short-circuiting elements, and obtained by combining, for example, a triac, a diode, and a one-way conductive short-circuiting element. The phase control circuit 116 controls the respective firing angles of the short-circuiting elements TR1 to TR3 so that the conductive phase to the single-phase load 4 is suitable for the operating state of the power utilization system 2-5. At this time, the respective firing angles of the short-circuiting elements TR1 to TR3 are controlled so as to supply power in a good balance to the single-phase load 4 from all phase voltages of the AC power supply 1.

The significance of the fifth embodiment will be explained here. When the single-phase load 4 is an AC motor, in the fourth embodiment, the single-phase power converter has a configuration such that the single-phase load 4 includes an inverter that converts the direct current to the alternating current, and the single-phase power converter converts the AC power supply 1 to the direct current once. In other words, when the single-phase power converter has a configuration of converting the AC power supply 1 to the direct current once, as in the fourth embodiment, the single-phase load 4 requires the inverter, thereby causing a cost increase.

Therefore, in order to avoid the cost increase in the single-phase load 4, here is an instance in which the single-phase load 4 does not have the inverter and has only the AC motor, and the single-phase power converter uses the non-conversion method, in which the single-phase power converter directly transmits a certain phase voltage (for example, of the L1 phase) of the AC power supply 1 to the AC motor. In this case, however, the AC motor can be driven, but only at a certain speed. On the other hand, in the fifth embodiment, since the phase control method for controlling the conduction phase for supplying power to the AC motor is introduced, the speed of the AC motor can be easily changed without requiring extra configuration for the single-phase load 4.

When the phase control method is employed and only a specific phase (for example, the L1 phase) of the AC power supply is to be the target, the input current to the AC motor includes the harmonics, since a distortion occurs with respect to the supplied voltage waveform of the L1 phase. Therefore, only the L1 phase contains harmonics by the amount of the AC motor. In order to prevent this, in the configuration of the fifth embodiment, power is supplied from the respective phases of the AC power supply 1 to perform well-balanced phase control, so that the harmonic current of the single-phase load can be distributed to the respective phases of the AC power supply 1. Therefore, even when the single-phase load is the AC motor, the effects of reduction of over-specification, small size and cost reduction of the apparatus can be achieved due to alleviation of unbalance between the respective phase currents.

In the fifth embodiment, the configuration example of the single-phase power converter of the non-conversion method is shown. The single-phase power converter 115 according to the fifth embodiment adopts the phase control method, and hence excellent effects described below can be obtained. That is, in the phase control by the single-phase power converter 115, the firing angle region generating the order in which the harmonic current value by the three-phase power converter 6 increases with respect to the predetermined value can be set to a nonuse region, and hence the three-phase power converter 6 can have an inexpensive configuration.

For example, when it is assumed that the predetermined value, being a harmonic suppression target value, is the IEC harmonic regulation value, the three-phase power converter 6 can hardly reduce the fifth-order harmonic. It is assumed herein that the fifth-order harmonic current occurs in an amount of 1.0 ampere with respect to the IEC harmonic regulation value (fifth-order=1.14 amperes, see Fig. 3), and with the phase control by the single-phase power converter 115, the fifth-order harmonic is generated in an amount of equal to or larger than 0.1 ampere in the region of the firing angle of 120 degrees ±10 degrees. In this case, by designating the region of the firing angle of from 110 to 130 degrees as the nonuse region, a power converter conforming to the harmonic regulation can be obtained inexpensively, without improving the harmonic suppressing ability of the three-phase power converter 6.

In Fig. 23, it is explained that well-balanced phase control is performed by supplying power from the respective phases of the AC power supply 1. However, according to a good balance with other single-phase power converters, power may be supplied from two phases or a specific one phase of the three-phase AC power supply to perform phase control. That is, according to the situation of the three-phase load and the single-phase load constituting the system, the configuration thereof is selected flexibility, thereby obtaining a small-size and low-cost power converter.

### Sixth Embodiment

Fig. 24 is a circuit diagram depicting the configuration of the power converter according to a sixth embodiment of the present invention. In Fig. 24, when the power utilization system 2-5 connected to the three-phase four-wire AC power supply 1 includes one three-phase load 3, and one single-phase load 4 driven by phase control, in the power converter 5-7, the three-phase power converter 6 is provided with respect to the three-phase load 3, and a single-phase power converter 120 is provided with respect to the single-phase load 4, so that the addition of the input current to the respective loads, that is, the harmonics in the input current to the system is suppressed to a predetermined value.

The single-phase load 4 is an AC motor having a main winding 117 and an auxiliary winding 118. In the single-phase power converter 120, a short-circuiting element TR4 is provided in series with the main winding 117 and in parallel with the auxiliary winding 118 so as to control the conduction phase of only the main winding 117 in the single-phase load 4. Further, a single-phase load driving switch 121 that switches whether to supply power to the single-phase load 4 is provided between the AC power supply 1 and the single-phase load 4, and a conduction controller 122 that controls the short-circuiting element TR4 and the single-phase load driving switch 121 is provided.

In the sixth embodiment, a configuration example of the single-phase power converter in which the phase control is introduced into the non-conversion method is shown, as in the fifth embodiment, but different from the fifth embodiment, the phase control is performed upon supply of power from one phase of the AC power supply.

The firing angle of the short-circuiting element TR4 is controlled by the conduction controller 122 to perform phase control of the single-phase load 4, being the AC motor. At this time, since only the conduction phase of the main winding 117 of the AC motor is controlled, the phase current is allowed to flow via the auxiliary winding 118, even when the short-circuiting element TR4 is opened. Hence, a distortion in the phase current waveform due to the opening and closing of the short-circuiting element TR4 is alleviated, thereby reducing the harmonic current generated by the single-phase load 4. Even when the short-circuiting element TR4 is opened, the power supply to the AC motor is continued. Therefore, when power to the AC motor is to be intercepted, to completely stop the AC motor, the conduction controller 122 controls so as to open the single-phase load driving switch 71.

The single-phase power converter 120 may be configured such that power is supplied from the L1 phase to the main winding 117 of the single-phase load 4, and power is supplied from the L2 phase to the auxiliary winding 118, to reduce unbalance in the input current by the two phases of the three-phase AC power supply 1.

### Seventh Embodiment

Fig. 25 is a circuit diagram depicting the configuration of the power converter according to a seventh embodiment of the present invention. As shown in Fig. 25, a configuration example (1) in the seventh embodiment is shown, in which when the power utilization system 2-4 connected to the three-phase four-wire AC power supply 1 includes one three-phase load 124, and two single-phase loads 125 and 126, a power converter 5-8 is formed of the three-phase power converter 40 in the first embodiment (Fig. 6), and power is supplied respectively to the three-phase load 124 and the two single-phase loads 125 and 126 from the three-phase power converter 40.

In other words, the three-phase power converter 40 shown in the first embodiment (Fig. 6) forcibly makes the short-circuit current to flow to a section where the phase current does not flow in the general three-phase full-wave rectifier circuit, to expand the conduction angle of the phase current, reduce the harmonics in the input current, and improve the power factor of the power supply, since the controller 50 controls the short-circuit 46 to operate once in the half cycle of the power supply, based on the phase voltage zero-crossing signal from the supply voltage detection circuit 49 as the operation basis.

In the power converter 5-8 according to the seventh embodiment, the three-phase load 124 is connected to the both terminals of the series circuit formed of two serially connected smoothing capacitors 43 and 44, in the three-phase power converter 40. One single-phase load 125 is connected to the both terminals of one smoothing capacitor 43, and the other single-phase load 126 is connected to the both terminals of the other smoothing capacitor 44. The three-phase load 124 is provided with the load controller 25, instead of the inverter controller 23 in the three-phase load 20 shown in Fig. 6. The load controller 25 has a function of controlling the operation of the two single-phase loads 125 and 126, in addition to the inverter 22, and the controller 50 of the three-phase power converter 40 obtains the load information from the load controller 25.

In the power converter 5-8 according to the seventh embodiment, the harmonic current not only by the three-phase load 124 but also by the single-phase loads 125 and 126 can be reduced by the three-phase power converter 40 having the three-phase simple switching method of an inexpensive and simple configuration, such as one short-circuiting operation in the half cycle of the power supply, thereby enabling suppression of the harmonics in the input current to the system to a predetermined value. Since it is not necessary to provide the single-phase power converter shown in other embodiments, other than the three-phase power converter 40, a power converter that realizes smaller size and lower cost can be obtained.

The single-phase loads 125 and 126 are supplied with power by one of the both terminal voltages of the two smoothing capacitors 43 and 44 serially connected and arranged between the DC output terminals of the three-phase rectifier 42, that is, by the voltage half the output DC voltage of the three-phase rectifier 42, and hence the single-phase loads 125 and 126 can be formed of an element having a low resisting pressure.

### Eighth Embodiment

Fig. 26 is a circuit diagram depicting the configuration of the power converter according to an eighth embodiment of the present invention. As shown in Fig. 26, in the eighth embodiment, a configuration example (2) is shown, in which when the power utilization system 2-5 connected to the three-phase four-wire AC power supply 1 includes one three-phase load 127, and one single-phase loads 128, a power converter 5-9 is formed of the three-phase power converter 40 in the first embodiment (Fig. 6), and power is supplied respectively to the three-phase load 127 and the single-phase load 128 from the three-phase power converter 40.

In other words, the three-phase power converter 40 shown in the first embodiment (Fig. 6) forces the short-circuit current to flow to a section where the phase current does not flow in the general three-phase full-wave rectifier circuit, to expand the conduction angle of the phase current, reduce the harmonics in the input current, and improve the power factor of the power supply, since the controller 50 controls the short-circuit 46 to operate once in the half cycle of the power supply, based on the phase voltage zero-crossing signal from the supply voltage detection circuit 49 as the operation basis.

In the power converter 5-9 according to the eighth embodiment, the three-phase load 127 is connected to the both terminals of the series circuit formed of two serially connected smoothing capacitors 43 and 44, in the three-phase power converter 40. The single-phase load 128 is connected to the both terminals of the capacitor 48 inserted between the neutral point 47 of the AC power supply and the midpoint 45 on the DC side. The three-phase load 127 is provided with the load controller 26, instead of the inverter controller 23 in the three-phase load 20 shown in Fig. 6. The load controller 26 has a function of controlling the operation of the single-phase load 128, in addition to the inverter 22, and the controller 50 of the three-phase power converter 40 obtains the load information from the load controller 26.

In the power converter 5-9 according to the eighth embodiment, the harmonic current not only by the three-phase load 127 but also by the single-phase load 128 can be reduced by the three-phase power converter 40 having the three-phase simple switching method of an inexpensive and simple configuration, such as one short-circuiting operation in the half cycle of the power supply, thereby enabling suppression of the harmonics in the input current to the system to a predetermined value. Since it is not necessary to provide the single-phase power converter shown in other embodiments, other than the three-phase power converter 40, a power converter that realizes smaller size and lower cost can be obtained. Needless to say, the three-phase power converter 100 shown in the second embodiment (Fig. 15) can be similarly applied thereto.

When the short-circuiting elements S1 to S3 constituting the short-circuit 46 are opened and closed once in the half cycle of the power supply, an AC current of a frequency three times as large as the power supply frequency flows to the capacitor 48 inserted between the neutral point 47 of the AC power supply and the midpoint 45 on the DC side, as shown by broken line in Fig. 7(h), with the short-circuiting operation of the respective short-circuiting elements S1 and S3. That is, in the eighth embodiment, power is supplied to the single-phase load 128 by using the AC current. As explained below, the level of the AC voltage appearing on the both terminals of the capacitor 48 is substantially the same as the both terminal voltage of the individual smoothing capacitors 43 and 44 explained in the seventh embodiment. As a result, the single-phase load 128 can be formed of an element having a low resisting pressure.

That is, the AC voltage level appearing on the both terminals of the capacitor 48 is as follows. When it is assumed that the cathode of the smoothing capacitor 44 is a reference potential 0 [V], and the anode of the smoothing capacitor 43 is Vdc [V], the potential on the DC midpoint 45 side of the capacitor 48 becomes Vdc/2. On the other hand, the potential on the neutral point 47 side of the ac power supply of the capacitor 48 is determined according to the electric charge charged and discharged accompanying the closing operation of the short-circuit 46, and as the maximum value, a value leading to a state in which the potential becomes the same as the anode of the smoothing capacitor 43 via the short-circuit 46 and the three-phase rectifier 42, that is, Vdc [V]. As the minimum value, a value leading to a state in which the potential becomes the same as the cathode of the smoothing capacitor 44 via the short-circuit 46 and the three-phase rectifier 42, that is, 0 [V]. Therefore, the potential difference between the both terminals of the capacitor 48 is -Vdc/2 to Vdc/2. However, for the brevity of explanation, a voltage drop slightly generated in the three-phase rectifier 42 and the short-circuit 46 is ignored. Thus, in the eighth embodiment, only the voltage of |Vdc/2|, being the individual both terminal voltage of the smoothing capacitors 43 and 44, is applied to the single-phase load 128 at maximum, and hence the single-phase load 128 can be formed of an element having a low resisting pressure.

In the seventh embodiment, since it is a type of supplying DC voltages 125 and 126 to the single-phase load, when the single-phase loads 125 and 126 are respectively the AC motor, the single-phase loads 125 and 126 require an inverter that converts direct current to alternating current. On the other hand, according to the eighth embodiment, since the AC voltage can be supplied to the single-phase load 128, when the single-phase load 128 is the AC motor, a power converter that can avoid a cost increase in the single-phase load 128 can be constructed. On the contrary, according to the eighth embodiment, when the single-phase load 128 is driven by the DC voltage, the single-phase load 128 requires a conversion circuit to DC, and hence a cost increase occurs than in the seventh embodiment.

In short, it is only necessary to use properly the method in the seventh embodiment and the method in the eighth embodiment, corresponding to the form of the single-phase load being a DC type or an AC type. By using the both methods of the seventh embodiment and the eighth embodiment together, a power converter that can accommodate one AC load, two DC type single-phase loads and one DC type single-phase load can be obtained.

### Ninth Embodiment

Fig. 27 is a circuit diagram depicting the configuration of the power converter according to a ninth embodiment of the present invention. As shown in Fig. 27, in the ninth embodiment, as a specific example of a power utilization system 2-3 connected to the three-phase four-wire AC power supply 1, and having one three-phase load 130 and three single-phase loads 131, 132, and 133, an air conditioner including a compressor as the three-phase load 130, and a control power supply, an outdoor blower, and an indoor blower as the single-phase loads 131, 132, and 133 will be explained. That is, an application example with respect to the basic configuration of the air conditioner is shown in Fig. 27.

A power converter 5-10 applied to the air conditioner 2-3 has a configuration such that the three-phase power converter 40 of the three-phase simple switching method shown, for example, in the first embodiment (Fig. 6) is provided with respect to the compressor, being the three-phase load 130, the single-phase power converter 65 of the passive method without having the short-circuiting element, for example, shown in the first embodiment (Fig. 10) is provided in a shared form with respect to the control power supply and the outdoor blower, being the single-phase loads 131 and 132, and the single-phase power converter 120 having a phase control function added to the non-conversion method, for example, shown in the sixth embodiment (Fig. 24) is provided with respect to the indoor blower, being the single-phase load 133.

The compressor 130 is supplied with the DC voltage obtained by the three-phase power converter 40 by converting the three-phase voltage from the three-phase AC power supply 1, that is, the both terminal voltage of the series circuit of the serially connected smoothing capacitors 43 and 44. The control power supply 131 and the outdoor blower 132 is commonly supplied with the both terminal voltage of the smoothing capacitor 68 in the single-phase power converter 65 that converts the phase voltage between, for example, the L3 phase and the neutral line of the AC power supply 1 to the direct current. The indoor blower 133 is supplied with the phase-controlled AC voltage from the single-phase power converter 120 that phase-controls and outputs the phase voltage between, for example, the L3 phase and the neutral line of the AC power supply 1. As a result, the power converter 5-10 can suppress the harmonics in the input current to the air conditioner 2-3 to a predetermined value.

In Fig. 27, the outdoor blower 132 includes an inverter, and is provided with the single-phase power converter 65. However, the single-phase power converter 75, 80, or 86 described above may be applied thereto. When the outdoor blower 132 does not include the inverter, the single-phase power converter of the non-conversion method (single-phase power converter 115, 120) may be provided. The same thing applies to the indoor blower 133. Needless to say, the three-phase power converter 55 or 100 may be applied to the three-phase power converter.

When the outdoor blower 132 and the indoor blower 133 have a plurality of fan motors, the respective fan motors are separated and regarded as a different single-phase load, and the power converter may be configured by selecting the appropriate single-phase power converter and connection. Also a multi-type air conditioner having a plurality of indoor machines can form the power converter by the similar method.

When the power converter of the present invention is applied to the air conditioner formed of a plurality of electrical loads, if it is assumed that the predetermined value, being the harmonic suppression target value, is the limit in the Class A of the IEC harmonic regulation, an inexpensive power converter conforming to the IEC harmonic regulation can be obtained, thereby contributing to the popularization of the inverter model known as the energy saving type.

### Tenth Embodiment

Fig. 28 is a circuit diagram depicting a configuration example (7) of the single-phase power converter in the power converter according to a tenth embodiment of the present invention. The tenth embodiment is explained in a form limiting to the single-phase power converter, for easy understanding, but the content thereof is similarly applicable to the three-phase power converter. That is, the tenth embodiment is also showing a specific configuration example of the three-phase power converter.

In the power converter according to the first to the ninth embodiments, the three-phase power converter and the single-phase power converter have the reactor in order to expand the conduction angle of the input current. However, by forming the power converter so that the inductance of the reactor can be changed, the power converter that improves the circuit efficiency and the power factor of the power supply in a region of the system where there is little input current can be obtained.

In other words, the inductance L of the reactor used in the three-phase power converter and the single-phase power converter is provided by L=µn²dS, where the magnetic permeability of a core constituting the reactor is denoted by µ, the cross section of the core is denoted by S, the winding number per unit length of the winding is denoted by n, and the winding width is denoted by d. The symbol µ is a constant determined according to the material of the core, and generally, by increasing any of the winding number n, winding width d, and the cross section S of the core, a reactor having a large inductance value is formed. However, with an increase in these values, wire resistance R also increases as the length of the winding of the reactor increases, and when I is assumed to be the current flowing through the reactor, the ohmic loss of the reactor provided by RI², that is, a loss in the reactor increases. That is, as the inductance L increases, the conduction angle of the input current can be expanded to increase the harmonic suppressing ability, but a circuit loss also increases.

The inductance value L of the reactor here is selected so that the desired harmonic suppressing ability can be obtained. In the explanation of the first to the ninth embodiments, when the harmonic current value is suppressed to a predetermined value over the whole load regions, such as the limit of the Class A in the IEC harmonic regulation (see Fig. 3), the inductance value L is designed so as to satisfy the regulation in the maximum load condition in which the input current is generally large, and large harmonic current is generated, and the inductance value L is similarly used also in the low load region in which the input current is small, and harmonic current is not generated much. Therefore, in the low load region, the generated harmonic current value has a margin with respect to the predetermined value, and a useless loss occurs by this margin.

When considering the system operating state, particularly in the air conditioner and a refrigerator, the operation under the maximum load condition is practically little, and the operation is generally performed under the low load condition. Therefore, a reduction in the useless loss in the low load condition largely contributes to energy savings. In the tenth embodiment, therefore, a single-phase power converter 135 is constructed, for example, as shown in Fig. 28, so that useless losses in the low load condition can be reduced, thereby contributing energy saving of the system. In Fig. 28, a configuration example is shown, in which in the single-phase power converter 86 shown in Fig. 13, the reactor 87 is replaced by a reactor 136 that can change the inductance value, and a controller 137 is provided instead of the switch controller 90.

In Fig. 28, the reactor 136 is formed, for example, by serially connecting a plurality of reactors, and the inductance value can be changed to La, Lb, Lc (La<Lb<Lc), according to a value of the terminal connected to a contact K (terminals A, B, and C are shown). The controller 137 controls opening and closing of the short-circuiting element 88 based on the single-phase load information (not shown), as with the switch controller 90, and also controls the node of the contact K.

For example, under a low load operating state in which the input current IL, being the single-phase load information, is smaller than a certain set value la, the controller 137 connects the contact K to the terminal A, so that the reactor 136 has a small inductance value La. Under a medium load operating state, in which the input current IL is larger than the set value la but is smaller than a certain set value Ib, which is larger than the set value la, the controller 137 connects the contact K to the terminal B, so that the reactor 136 has a medium inductance value Lb. Further, under a large load operating state in which the input current IL is larger than the set value Ib, the controller 137 connects the contact K to the terminal C, so that the reactor 136 has a large inductance value Lc.
Fig. 29 is a characteristic comparison diagram for explaining the effects when the single-phase power converter shown in Fig. 28 is applied. In Fig. 29, the input current IL [A] is plotted on the horizontal axis, and (1) circuit efficiency [%] and (2) harmonic current generated amount [A] are respectively plotted on the vertical axis, wherein the characteristics (a) and (c) in the tenth embodiment and characteristics (b) and (d) in the conventional example are shown. On the horizontal axis, the region up to the set value la is indicated as the low load region, and the region from the set value la to the set value Ib is indicated as the medium load region, and the set value Ib or above is indicated as the high load region.

The inductance values La, Lb, and Lc can be set to inductance values such that the harmonic current generated in the respective load regions is not larger than a certain level, and is not suppressed too much. As a result, as shown in Fig. 29, in (1) circuit efficiency [%], the characteristic (b) in the conventional example drops linearly with a downward inclination over from the low load region to the high load region. However, the characteristic (a) in the tenth embodiment drops linearly with a downward inclination stepwise in the respective load regions. At this time, in the low and the medium load regions, the circuit efficiency is improved than in the conventional example, and in the high load region, the performance equal to that of the conventional example can be ensured.

In (2) harmonic current generated amount [A], the characteristic (d) in the conventional example increases linearly toward the desired harmonic suppressing ability level with an upward inclination over from the low load region to the high load region. However, the characteristic (c) in the tenth embodiment increases linearly toward the desired harmonic suppressing ability level stepwise in the respective load regions. Therefore, it is indicated that in the whole load region, the desired harmonic suppressing ability can be maintained.

It has been explained that the reactor 136 can change over three types of inductance values, but needless to say, the number of changes is optional. Further, the configuration may be such that a reactor having two winding, that is, a main winding and an auxiliary winding magnetically coupled to each other is used, and the inductance value of the main winding can be changed by controlling the voltage applied to the auxiliary winding or the current flowing through the auxiliary winding, so that the inductance value on the low load side is decreased, and as the load becomes high, the inductance value is increased, corresponding to the load operating state.

An example in which the reactor in the single-phase power converter shown in Fig. 13 is variable has been explained above. Under the same idea, the configuration of the reactor can be changed, in a three-phase power converter that suppresses the harmonic by expanding the conduction angle of the input current by the reactor. If the power converter includes a three-phase power converter and a single-phase power converter having such a reactor with a variable configuration, in a system in which the harmonic limit is provided as an absolute value, the object to suppress the harmonics in the input current to a predetermined value as the whole system can be achieved more effectively.

As explained above, according to the present invention, the three-phase power converter can suppress the harmonics in the input current by the simple switching method, when performing AC-DC conversion, and the power factor of the power supply can be improved. According to the power converter of the present invention, the harmonic input to the power utilization system 2 connected to the three-phase four-wire AC power supply can be suppressed to a predetermined value with an inexpensive configuration.

### INDUSTRIAL APPLICABILITY

The present invention is suitable for a power converter used in a power utilization system connected to a three-phase four-wire AC power supply that can suppress the harmonics in the system input, and improve the power factor of the power supply with an inexpensive configuration.

## Claims

1. A three-phase power converter comprising:
a full-wave rectifier circuit obtained by serially connecting at least two smoothing capacitors between direct current output terminals of a three-phase rectifier that rectifies alternating voltage input via a reactor that is connected to each phase line of a three-phase alternate current power supply;
three short-circuiting units having one end respectively connected to a connection node between the reactor and input terminals of the respective phases of the three-phase rectifier and other end commonly connected to each other to form a neutral point of the alternate current power supply, or the other end connected via a capacitor or directly to a connecting point of the at least two smoothing capacitors; and
a controller that controls switching operation of the three short-circuiting units corresponding to fluctuations in loads or power supply voltage.

2. A three-phase power converter comprising:
a full-wave rectifier circuit obtained by connecting a smoothing capacitor between direct current output terminals of a three-phase rectifier that rectifies alternating voltage input via a reactor that is connected to each phase line of a three-phase alternate current power supply;
three short-circuiting units having one end respectively connected to a connection node between the reactor and input terminals of the respective phases of the three-phase rectifier and other end commonly connected via a capacitor or directly to one of output terminals of the three-phase rectifier; and
a controller that controls switching operation of the three short-circuiting units corresponding to fluctuations in loads or power supply voltage.

3. The three-phase power converter according to claim 1, wherein the controller controls the switching operation of the three short-circuiting units corresponding to the fluctuations in the loads or the power supply voltage so that the three short-circuiting units perform short-circuiting operation only once or several times in a half cycle of the power supply.

4. The three-phase power converter according to claim 2, wherein the controller controls the switching operation of the three short-circuiting units corresponding to the fluctuations in the loads or the power supply voltage so that the three short-circuiting units perform short-circuiting operation only once or several times in a half cycle of the power supply.

5. The three-phase power converter according to claim 1, wherein the controller controls the switching operation of the three short-circuiting units by switching between a condition in which the three short-circuiting units do not perform an opening operation until charging of the capacitor is completed after having performed a closing operation once and a condition in which the three short-circuiting units perform the opening operation before completion of charging of the capacitor after having performed the closing operation once, corresponding to the load condition.

6. The three-phase power converter according to claim 2, wherein the controller controls the switching operation of the three short-circuiting units by switching between a condition in which the three short-circuiting units do not perform an opening operation until charging of the capacitor is completed after having performed a closing operation once and a condition in which the three short-circuiting units perform the opening operation before completion of charging of the capacitor after having performed the closing operation once, corresponding to the load condition.

7. A power converter applied to a power utilization system connected to a three-phase four-wire alternate current power supply, the power utilization system includes at least one three-phase load and at least one single-phase load present together, the power converter comprising:
a three-phase power converter that receives respective line voltages of the three-phase four-wire alternate current power supply, and supplies power to the at least one three-phase load, the number of the three-phase power converter being equal to or less than the number of the three-phase load; and
a single-phase power converter that receives a phase voltage between a neutral line and one phase of the three-phase four-wire alternate current power supply, and supplies power to the at least one single-phase load, the number of the single-phase power converter being equal to or less than the number of the single-phase load, wherein
the three-phase power converter provided with respect to the at least one three-phase load and the single-phase power converter provided with respect to the at least one single-phase load include harmonic suppression amount separately selected so as to suppress overall harmonic components in input current to the power utilization system to a predetermined value.

8. The power converter according to claim 7, used in an air conditioning system including:
a three-phase motor as the at least one three-phase load; and
either or both of an outdoor equipment and an indoor equipment other than the three-phase motor as the at least one single-phase load.

9. The power converter according to claim 7, wherein the three-phase power converter is the three-phase power converter according to claim 1.

10. The power converter according to claim 7, wherein the three-phase power converter is the three-phase power converter according to claim 2.

11. The power converter according to claim 7, wherein when a plurality of single-phase power converters are prepared, and the respective single-phase power converters are connected to a phase line and the neutral line, the phase line being selected from among the three phase lines so as to suppress unbalance between phases of the alternate current power supply, instead of being connected to the same phase line.

12. The power converter according to claim 7, wherein when the single-phase power converter includes a phase controller that controls a conduction phase to the single-phase load, the phase controller controls the phase in such a manner that conduction is not performed in a firing angle band where harmonic current of an order that cannot be suppressed by the three-phase power converter is generated.

13. The power converter according to claim 7, wherein when the at least one three-phase power converter and the at least one single-phase power converter include a reactor,
any one or a plurality of the reactors is constructed to have a plurality of inductance values, and
the inductance values decrease as load current decreases, and the inductance values increase as the load current increases, corresponding to an operating state of each load to which the power converter is connected.
